(19) **Europäisches Patentamt**
**European Patent Office**
**Office européen des brevets**

(11) **EP 3 646 597 B1**

(12) **FASCICULE DE BREVET EUROPEEN**

(45) Date de publication et mention
de la délivrance du brevet:
**07.07.2021 Bulletin 2021/27**

(21) Numéro de dépôt: **18737155.4**

(22) Date de dépôt: **12.06.2018**

(51) Int Cl.:
***H04N 19/50*** (2014.01)     ***H04N 19/13*** (2014.01)
***H04N 19/463*** (2014.01)     ***H04N 19/91*** (2014.01)
***H04N 19/154*** (2014.01)     ***H04N 19/18*** (2014.01)
***H04N 19/192*** (2014.01)

(86) Numéro de dépôt international:
**PCT/EP2018/065563**

(87) Numéro de publication internationale:
**WO 2019/015884 (24.01.2019 Gazette 2019/04)**

(54) **PROCÉDÉ DE DÉCODAGE D'UNE IMAGE, PROCÉDÉ DE CODAGE, DISPOSITIFS, ÉQUIPEMENT TERMINAL ET PROGRAMMES D'ORDINATEURS ASSOCIÉS**

VERFAHREN ZUR DECODIERUNG EINES BILDES, CODIERUNGSVERFAHREN, VORRICHTUNGEN, ENDGERÄTEAUSRÜSTUNG UND DAMIT VERBUNDENE COMPUTERPROGRAMME

METHOD FOR DECODING AN IMAGE, CODING METHOD, DEVICES, TERMINAL EQUIPMENT AND COMPUTER PROGRAMS ASSOCIATED THEREWITH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2017 FR 1756072**

(43) Date de publication de la demande:
**06.05.2020 Bulletin 2020/19**

(73) Titulaire: **Fondation B-COM**
**35510 Cesson-Sévigné (FR)**

(72) Inventeur: **HENRY, Félix**
**35760 Saint Gregoire (FR)**

(74) Mandataire: **Jacobacci Coralis Harle**
**32, rue de l'Arcade**
**75008 Paris (FR)**

(56) Documents cités:
**US-A1- 2013 044 808**

- **KOYAMA J ET AL: "Coefficient sign bit compression in video coding", 2012 PICTURE CODING SYMPOSIUM (PCS 2012) : KRAKOW, POLAND, 7 - 9 MAY 2012 ; [PROCEEDINGS], IEEE, PISCATAWAY, NJ, 7 mai 2012 (2012-05-07), pages 385-388, XP032449909, DOI: 10.1109/PCS.2012.6213370 ISBN: 978-1-4577-2047-5 cité dans la demande**
- **HOWARD P G ET AL: "New methods for lossless image compression using arithmetic coding", DATA COMPRESSION CONFERENCE, 1991. DCC '91. SNOWBIRD, UT, USA 8-11 APRIL 1, LOS ALAMITOS, CA, USA, IEEE COMPUT. SOC, US, 8 avril 1991 (1991-04-08), pages 257-266, XP010034245, DOI: 10.1109/DCC.1991.213355 ISBN: 978-0-8186-9202-4**

**Description**

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en œuvre dans les codeurs actuels ou à venir (JPEG, MPEG, H.264, HEVC, etc et leurs amendements), et au décodage correspondant.

### 2. Art antérieur

On considère un schéma de compression classique d'une image numérique, selon lequel l'image est divisée en blocs de pixels. Un bloc courant à coder est prédit à partir d'un bloc précédemment codé décodé. Un bloc résidu est obtenu par soustraction des valeurs originales aux valeurs prédites. Il est ensuite transformé à l'aide d'une transformation de type DCT (pour « Discrète Cosinus Transform », en anglais) ou ondelettes. Les coefficients transformés sont quantifiés puis leurs amplitudes sont soumises à un codage entropique de type Huffmann ou arithmétique. Un tel codage obtient des performances efficaces, car, du fait de la transformation, les valeurs des amplitudes à coder sont en grande majorité nulles.

En revanche, il ne s'applique pas aux valeurs des signes des coefficients, dont les valeurs + et - sont généralement associées à des probabilités d'apparition équivalentes. Ainsi, les signes des coefficients sont codés par un bit 0 ou 1.

On connait de la demande de brevet français publiée sous le numéro FR3023112, de la demande de brevet US 2013/044808 et de la publication "Coefficient sign bit compression in video coding", Koyama J ET AL, 2012 PICTURE CODING SYMPOSIUM (PCS 2012), le fait de sélectionner les signes des coefficients à prédire dans le bloc courant en fonction d'un score associé à un contexte de codage du coefficient, le score étant représentatif d'un niveau de fiabilité d'une prédiction du signe.

Un avantage est qu'on s'assure que pour une grande majorité des signes prédits, l'indicateur de prédiction indiquera une prédiction correcte et procurera ainsi un contexte favorable au codage entropique. De cette manière, les performances de compression sont accrues.

### 3. Inconvénients de l'art antérieur

Un inconvénient de cette méthode est que le codeur entropique utilisé est le même quel que soit la séquence de signes à prédire.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui permette d'améliorer les performances de compression.

### 5. Exposé de l'invention

Ces objectifs, ainsi que d'autres qui apparaîtront par la suite, sont atteints à l'aide d'un procédé de décodage d'un flux de données codées représentatif d'au moins une image, ladite image étant découpée en blocs, le procédé de décodage comprenant, pour le bloc courant, les étapes suivantes :

- Evaluation d'une pluralité d'hypothèses de valeurs d'au moins un élément de description du bloc courant, par calcul d'une mesure de vraisemblance par hypothèse, ledit calcul étant le même que celui utilisé pour coder le flux de données ;
- Calcul d'une disparité des mesures de vraisemblance obtenues ;
- Détermination d'au moins un paramètre d'un décodeur en fonction de la disparité calculée, ledit au moins un paramètre appartenant à un groupe comprenant au moins :

  - un paramètre comprenant un contexte associé à un décodeur arithmétique binaire adaptatif ;

- un paramètre comprenant une probabilité associée à l'information complémentaire ;
- un paramètre comprenant un identifiant d'un décodeur prédéterminé ;

- Décodage à l'aide d'un décodeur entropique paramétré par ledit au moins un paramètre, d'une information complémentaire d'identification d'au moins une desdites hypothèses ; et
- Identification d'une des hypothèses à l'aide d'au moins l'information complémentaire décodée et obtention de la valeur du au moins un élément de description pour le bloc courant, à partir de l'hypothèse identifiée.

On entend par élément de description d'un bloc toute information, paramètre ou caractéristique destinée à être codée et transmise dans le flux de données, à partir de laquelle le décodeur peut reconstruire des valeurs de pixels de l'image.

Avec l'invention, le décodeur évalue une pluralité d'hypothèses de valeurs d'au moins un élément de description du bloc courant à l'aide d'une mesure de vraisemblance et calcule une disparité de ces mesures. La disparité calculée est exploitée pour déterminer le décodeur entropique à utiliser pour décoder une information codée et transmise dans le flux, ladite information étant complémentaire d'au moins une desdites hypothèses.

Le codage est ainsi adapté aux statistiques particulières de cette information transmise par le codeur au décodeur, ce qui permet d'améliorer les performances de compression.

De façon correspondante, l'invention concerne aussi un procédé de codage d'un flux de données représentatif d'au moins une image, ladite image étant découpée en blocs, caractérisé en ce qu'il comprend les étapes suivantes, mises en œuvre pour un bloc courant:

- Pour une pluralité d'hypothèses de valeurs d'au moins un élément de description du bloc courant, obtention d'une mesure de vraisemblance par hypothèse;
- Calcul d'une disparité des mesures de vraisemblance obtenues ;
- Détermination d'au moins un paramètre d'un codeur en fonction de la disparité calculée, ledit au moins un paramètre appartenant à un groupe comprenant au moins :

    - un paramètre comprenant un contexte associé à un codeur arithmétique binaire adaptatif ;
    - un paramètre comprenant une probabilité associée à l'information complémentaire ;
    - un paramètre comprenant un identifiant d'un codeur prédéterminé ;

- Identification d'au moins une hypothèse et détermination d'une information complémentaire d'identification de ladite au moins une des hypothèses;
- Codage de ladite information complémentaire à l'aide d'un codeur entropique paramétré par ledit au moins un paramètre; et
- Insertion de l'information codée dans le flux.

Les différents modes de réalisation qui vont maintenant être décrits concernent aussi bien le procédé de décodage que le procédé de décodage.

Selon un aspect de l'invention, le au moins un paramètre comprend un contexte associé à un codeur ou décodeur arithmétique adaptatif.

Par exemple, il s'agit d'un codeur de type CABAC (pour « *Context-adaptive binary arithmetic coding »,* en anglais). Le contexte de ce codeur correspond par exemple à celui décrit dans l'article Marpe, D., Schwarz, H., and Wiegand, T., Context-Based Adaptive Binary Arithmetic Coding in the H.264/AVC Video Compression Standard, IEEE Trans. Circuits and Systems for Video Technology, Vol. 13, No. 7, pp. 620-636, July, 2003, c'est-à-dire un paramétrage d'un codeur entropique qui permet de minimiser le débit de codage d'une source particulière associée à une distribution de probabilité particulière.

Un avantage est de définir un contexte de codage/décodage spécifiquement adapté à l'information complémentaire déterminée pour le bloc courant.

Selon un autre aspect de l'invention, le au moins un paramètre comprend une probabilité associée à l'information complémentaire.

Avantageusement, cette probabilité est utilisée pour initialiser le contexte CABAC servant à coder/décoder l'information complémentaire déterminée pour le bloc courant.

Selon encore un autre aspect, le procédé comprend un identifiant d'un codeur ou décodeur prédéterminé.

Un avantage est que le codeur respectivement le décodeur peut ainsi exécuter le codeur/décodeur le mieux adapté à l'information complémentaire.

Selon encore un autre aspect de l'invention, le procédé comprend une étape de classement des hypothèses selon un ordre de vraisemblance décroissante, l'information complémentaire comprend un rang dans le classement et la valeur du au moins un élément de description correspond à l'hypothèse classée audit rang.

Dans ce mode de réalisation de l'invention, l'information complémentaire permet d'identifier l'hypothèse de combinaisons de valeurs qui correspond à l'élément de description.

L'invention exploite la disparité des mesures de vraisemblance des différentes hypothèses pour déterminer le codeur/décodeur le plus adapté à l'information de rang.

Un avantage de ce mode de réalisation est que l'information complémentaire est de beaucoup plus petite taille que l'élément de description, ce qui permet de réaliser un gain substantiel en compression.

Selon encore un autre aspect, le procédé comprend en outre une étape de prédiction de la valeur du au moins un élément de description par sélection de l'hypothèse de valeur associée à la mesure de vraisemblance la plus élevée, dite valeur prédite et l'information complémentaire comprend une différence entre la valeur prédite et la valeur de l'élément de description, dite valeur résidu.

Dans ce mode de réalisation, le décodeur reproduit le fonctionnement du codeur pour déterminer la meilleure hypothèse au sens d'un critère de vraisemblance. Il décode ensuite l'information complémentaire qui représente la différence de valeur entre l'hypothèse choisie et la vraie valeur de l'élément de description.

Ce mode de réalisation est notamment bien adapté à la prédiction de signes, pour laquelle la valeur résidu est de petite taille et présente des valeurs de distribution non uniforme.

Selon un autre aspect de l'invention, le procédé évalue une pluralité d'hypothèses d'une séquence d'au moins deux éléments de description, pour le premier élément de la séquence, il calcule une disparité des mesures de vraisemblance obtenues pour la pluralité d'hypothèses de la séquence et obtient la valeur du premier élément de description de la séquence, à partir de celle de l'hypothèse identifiée.

Avantageusement, une fois le premier élément traité, il est supprimé de la séquence et les étapes du procédé sont répétées pour le deuxième élément, devenu premier élément de la nouvelle séquence.

L'invention concerne également un dispositif adapté pour mettre en œuvre le procédé de décodage selon l'un quelconque des modes particuliers de réalisation définis ci-dessus. Ce dispositif pourra bien sûr comporter les différentes caractéristiques relatives au procédé selon l'invention. Ainsi, les caractéristiques et avantages de ce dispositif sont les mêmes que ceux du procédé de décodage, et ne sont pas détaillés plus amplement.

Selon un mode particulier de réalisation de l'invention, un tel dispositif est compris dans un équipement terminal.

L'invention concerne également un dispositif adapté pour mettre en œuvre le procédé de codage selon l'un quelconque des modes particuliers de réalisation définis ci-dessus. Ce dispositif pourra bien sûr comporter les différentes caractéristiques relatives au procédé selon l'invention. Ainsi, les caractéristiques et avantages de ce dispositif sont les mêmes que ceux du procédé de codage, et ne sont pas détaillés plus amplement.

Selon un mode particulier de réalisation de l'invention, un tel dispositif est compris dans un équipement terminal.

L'invention concerne aussi un équipement terminal d'utilisateur comprenant un dispositif de décodage d'au moins une image et/ou un dispositif de codage d'au moins une image selon l'invention.

L'invention concerne aussi un programme d'ordinateur comportant des instructions pour la mise en œuvre des étapes d'un procédé de codage d'au moins une image tel que décrit précédemment, lorsque ce programme est exécuté par un processeur.

L'invention concerne aussi un programme d'ordinateur comportant des instructions pour la mise en œuvre des étapes d'un procédé de décodage d'au moins une image tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de codage respectivement de décodage d'au moins une image selon l'invention, éventuellement amovible, mémorisant un programme d'ordinateur mettant en œuvre un procédé de codage respectivement de décodage, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** illustre de façon schématique une séquence d'images découpées en blocs ;

- la figure **2** décrit les étapes d'un procédé de codage d'une image selon l'invention ;

- la figure **3** détaille une étape de traitement, destinée à fournir un ensemble d'éléments de description du bloc courant à coder;

- la figure **4** décrit les étapes d'un procédé de décodage d'une image selon l'invention ;

- la figure **5** décrit les étapes d'un procédé de codage d'une image selon un premier mode de réalisation de l'invention ;

- la figure **6** illustre de façon schématique un exemple de mesure de coût calculée pour évaluer une mesure de vraisemblance associée à une hypothèse pour le bloc courant selon le premier mode de réalisation de l'invention ;

- la figure **7** décrit les étapes d'un procédé de codage d'une image selon une variante du premier mode de réalisation de l'invention ;

- la figure **8** décrit les étapes d'un procédé de décodage d'une image selon le premier mode de réalisation de l'invention ;

- la figure **9** décrit les étapes d'un procédé de décodage d'une image selon une variante du premier mode de réalisation de l'invention ;

- la figure **10** décrit les étapes d'un procédé de codage d'une image selon le deuxième mode de réalisation de l'invention ;

- les figures **11, 12** et **13** illustrent de façon schématique l'étape de décodage d'un bloc courant à partir d'une hypothèse de valeur de séquence d'éléments binaires et de données codées de la première portion de flux selon le deuxième mode de réalisation de l'invention;

- la figure **14** illustre de façon schématique un exemple de mesure de coût calculée pour évaluer une mesure de vraisemblance associée à une hypothèse pour le bloc courant selon le deuxième mode de réalisation de l'invention ;

- la figure **15** illustre de façon schématique une étape de lecture de données codées dans la première et la deuxième portion de flux à l'aide d'un premier et d'un deuxième pointeurs selon le deuxième mode de réalisation de l'invention ;

- la figure **16** décrit les étapes d'un procédé de décodage d'une image selon le deuxième mode de réalisation de l'invention ;

- la figure **17** illustre de façon schématique un exemple de structure d'un flux de données comprenant une première et une deuxième portions de flux selon l'invention ;

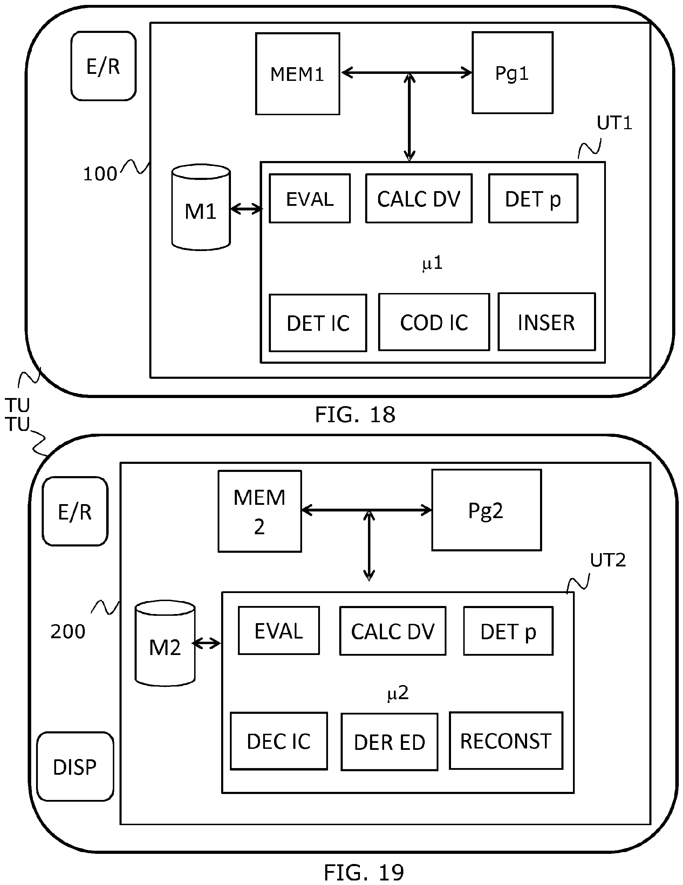

- la figure **18** illustre de façon schématique un exemple de structure matérielle d'un dispositif de codage l'invention ; et

- la figure **19** illustre de façon schématique un exemple de structure matérielle d'un dispositif de décodage l'invention.

## 7. Description d'un mode de réalisation particulier de l'invention

Le principe général de l'invention repose sur l'évaluation d'hypothèses de valeurs d'une séquence d'éléments binaires représentative d'au moins une partie d'un élément de description du bloc courant, basée sur le calcul d'une mesure de vraisemblance, et sur l'exploitation d'une disparité des mesures calculées pour adapter le codage/décodage entropique d'informations complémentaires d'identification de cette séquence.

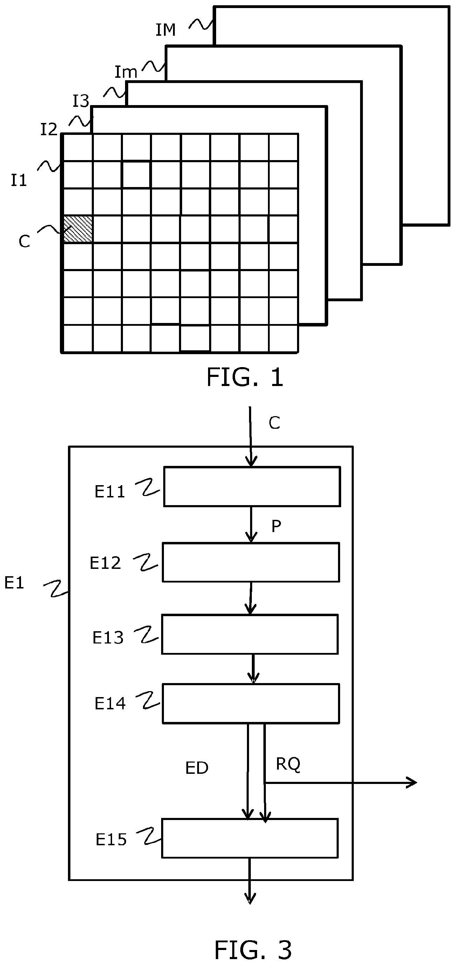

En relation avec la Figure **1,** on considère une vidéo originale constituée d'une suite de M images I1, I2, ...IM, avec M entier non nul. Les images sont encodées par un encodeur, les données codées sont insérées un train binaire TB transmis à un décodeur via un réseau de communication, ou un fichier compressé FC, destiné à être stocké sur un disque dur par exemple. Le décodeur extrait les données codées, puis reçues et décodées par un décodeur dans un ordre prédéfini connu de l'encodeur et du décodeur, par exemple dans l'ordre temporel I1, puis I2, ..., puis IM, cet ordre pouvant différer suivant le mode de réalisation.

Lors de l'encodage d'une image Im, avec m entier compris entre 1 et M, celle-ci est subdivisée en blocs de taille maximale qui peuvent à leur tour être subdivisés en blocs plus petits. Chaque bloc C va subir une opération d'encodage ou de décodage consistant en une suite d'opérations, comprenant de manière non exhaustive une prédiction, un calcul de résidu du bloc courant, une transformation des pixels du bloc courant en coefficients, une quantification des coefficients et un codage entropique des coefficients quantifiés. Cette suite d'opérations sera détaillée par la suite.

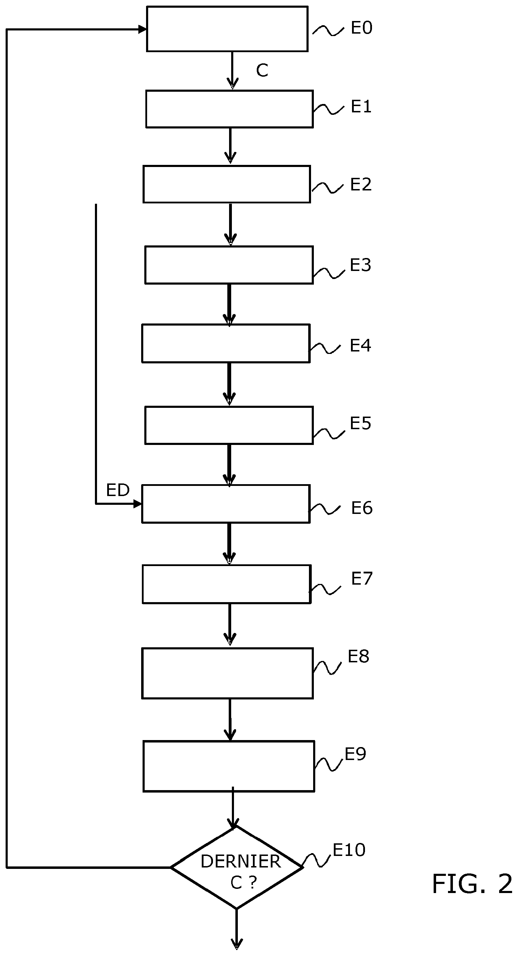

Les étapes du procédé de codage d'une image $I_m$ selon l'invention vont maintenant être décrites en relation avec la Figure **2.**

En E0, on commence par sélectionner comme bloc courant C le premier bloc à traiter. Par exemple, il s'agit du premier bloc (dans l'ordre lexicographique). Ce bloc comporte NxN pixels.

Au cours d'une étape E1, on traite un bloc C courant en mettant en œuvre un schéma de codage, par exemple tel que spécifié dans la norme HEVC, dans le document "ISO/IEC 23008-2:2013 - High efficiency coding and media delivery in heterogeneous environments -- Part 2: High efficiency video coding », International Organization for Standardization, publié en novembre 2013.

Cette étape de traitement est destinée à fournir un ensemble d'éléments de description ED des données à coder pour le bloc courant C. Ces éléments de description peuvent être de types variés. De façon non exhaustive, ils comprennent notamment :

- les informations relatives à des choix de codage du bloc courant C, par exemple un mode de codage du bloc courant, tel que le mode INTRA, INTER ou SKIP, un mode de prédiction du bloc courant, parmi les 35 modes de prédiction d'un bloc INTRA, un mode de prédiction d'un vecteur mouvement estimé pour le bloc courant, ou encore la signifiance d'une amplitude d'un coefficient , connus en soi dans HEVC;
- les valeurs de données à coder, telles que les composantes d'un vecteur mouvement, l'amplitude ou le signe d'un coefficient ;

On suppose qu'il existe L découpes en blocs possibles numérotées de 1 à L, et que la découpe utilisée sur le bloc C est la découpe numéro I. Par exemple, il peut y avoir 4 découpes possibles, en blocs de taille 4x4, 8x8, 16x16, et 32x32.

En relation avec la Figure **3,** on détaille préalablement un exemple de sous-étapes mises en œuvre par ce traitement $E_1$ du bloc courant C sélectionné, conformément à la norme HEVC.

Au cours d'une étape $E1_1$, on détermine une prédiction P du bloc original C. Il s'agit d'un bloc de prédiction construit par des moyens connus, typiquement par compensation de mouvement (bloc issu d'une image de référence précédemment décodée) dans le cas d'une prédiction dite INTER, ou par prédiction INTRA (bloc construit à partir des pixels décodés immédiatement adjacents au bloc courant dans l'image ID). Les informations de prédiction liées à P sont codées dans le train binaire TB ou fichier compressé FC. On suppose ici qu'il y a K modes de prédiction possibles $M_1$, $M_2$,..., $M_K$, avec K entier non nul, et que le mode de prédiction choisi pour le bloc C est le mode $M_k$.

Au cours d'une étape E12, un résidu original R est formé, par soustraction R = C-P de la prédiction P du bloc courant C au bloc courant C.

Au cours d'une étape E13, le résidu R est transformé en un bloc résidu transformé, appelé RT, par une transformée de type DCT ou transformée en ondelettes, toutes les deux connues de l'homme de métier et notamment mises en œuvre dans les normes JPEG pour la DCT et JPEG2000 pour la transformée en ondelettes.

En E14, le résidu transformé RT est quantifié par des moyens classiques de quantification, par exemple scalaire ou vectorielle, en un bloc résidu quantifié RQ. Ce bloc quantifié RQ contient NxN coefficients. De façon connue dans l'état de l'art, ces coefficients sont scannés dans un ordre prédéterminés de façon à constituer un vecteur monodimensionnel RQ[i], où l'indice i varie de 0 à $N^2$-1. L'indice i est appelé fréquence du coefficient RQ[i]. Classiquement, on scanne ces coefficients par ordre croissant de fréquence, par exemple selon un parcours en zigzag, qui est connu de la norme de codage d'image fixes JPEG.

A l'issue de l'étape E14, on dispose donc pour le bloc courant C d'un ensemble E d'éléments de description de données à coder, parmi lesquels on compte les coefficients résidus transformés quantifiés RQ[i], les signes de ces coefficients, le mode de prédiction $M_k$ etc

Lors d'une étape E15, on vient coder les informations d'amplitude des coefficients du bloc résidu RQ par codage entropique. Le codage entropique consiste à exploiter la distribution des éléments de syntaxe pour en réduire le débit. Par exemple, pour un élément de syntaxe prenant de multiples valeurs possibles, on attribuera un code binaire court aux valeurs fréquentes et un code binaire long aux valeurs rares. Ceci permet de réduire, en moyenne, le nombre de bits nécessaires au codage de ces valeurs. Le code Morse est un exemple de code entropique adapté à la statistique des lettres (qui constituent dans ce cas les éléments de syntaxe) dans la langue anglaise. Le code de Huffman est une technique pour construire un code binaire adapté à une statistique donnée, avec pour principe que chaque élément de syntaxe est codé par un nombre entier de bits. Le codage arithmétique permet quant à lui de mutualiser des bits entre plusieurs éléments de syntaxe, et ainsi de coder un élément de syntaxe sur un nombre non entier de bits.

Par amplitude, on entend ici la valeur absolue du coefficient. Des moyens de codage des amplitudes sont par exemple décrits dans la norme HEVC et dans l'article de Sole et al, intitulé « Transform Coefficient Coding in HEVC », publié dans la revue IEEE Transactions on Circuits and Systems for Video Technology, Volume 22, Issue: 12, pp. 1765 - 1777, en décembre 2012. Classiquement, on peut coder pour chaque coefficient une information représentative du fait que le coefficient est non nul. Ensuite, pour chaque coefficient non nul, une ou plusieurs informations relatives à l'amplitude sont codées. On obtient les amplitudes codées CA.

On suppose que tous les éléments de description du bloc courant ne sont pas codés à ce stade et qu'il reste un ensemble de N éléments de description restant à coder. Par exemple, on ne code pas les signes des coefficients.

En E2, on obtient une séquence de M éléments de description dans cet ensemble, avec M entier non nul, M inférieur ou égal à N, représentative d'une partie, d'un ou de plusieurs éléments de description du bloc courant issus de cet ensemble E.

En E3, on considère la pluralité d'hypothèses de valeurs possibles pour la séquence de M éléments binaires obtenue. On les évalue en calculant une mesure de vraisemblance par hypothèse.

En E4, on calcule une disparité des mesures de vraisemblances obtenues et on détermine en E5 au moins un paramètre d'un codeur entropique en fonction de la disparité calculée.

En E6, on détermine une information complémentaire d'identification d'au moins une hypothèse de la pluralité d'hypothèses ;

En E7, on code ladite information complémentaire à l'aide du codeur déterminé et on insère l'information codée dans le flux.

En E8, on reconstruit le bloc courant C.

En E9, on insère les données codées pour le bloc C dans le train binaire et on teste en E10 s'il reste un bloc C à traiter. Si oui, on répète les étapes E1 à E10. Sinon on a terminé le traitement.

Le train binaire TB produit par le procédé selon l'invention est destiné à être présenté en entrée d'un décodeur, local ou distant. Par exemple, un signal portant le train binaire est transmis au décodeur par l'intermédiaire d'un réseau de communication.

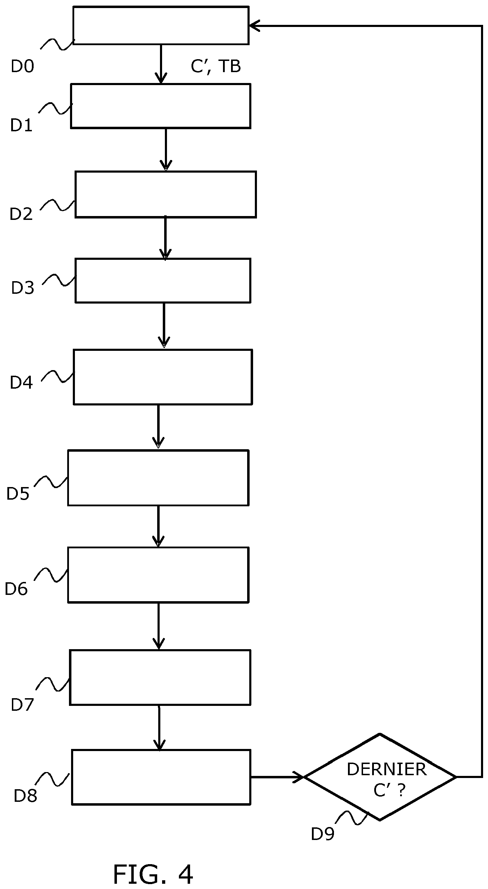

En relation avec la Figure **4,** on décrit les étapes d'un procédé de décodage selon l'invention.

En D0, on sélectionne un bloc courant C' à décoder.

En D1, on traite le bloc C' courant en mettant en œuvre le schéma de décodage, correspondant au schéma de codage utilisé par l'encodeur, par exemple tel que spécifié dans la norme HEVC. En particulier, au cours de cette étape, on identifie un ensemble d'éléments ED de description des données à décoder pour le bloc courant C'.

En D2, on sélectionne dans cet ensemble au moins un élément de description du bloc courant.

En D3, on évalue une pluralité d'hypothèses de valeurs du au moins un élément de description sélectionné sur la base d'une mesure de vraisemblance par hypothèse;

En D4, on calcule une disparité des mesures de vraisemblance obtenues;

En D5, on détermine au moins un paramètre d'un décodeur en fonction de la disparité DV calculée ;

En D6, on décode l'aide du décodeur déterminé une information représentative d'une valeur du au moins un élément de description;

En D7, on obtient la valeur du au moins un élément de description pour le bloc courant, à partir d'une des hypothèses testées, des mesures de vraisemblance obtenues et de l'information décodée.

En D8, on reconstruit le bloc à l'aide de la valeur du au moins un élément de description.

En D9, on teste s'il reste des blocs à décoder dans l'image. Si c'est le cas, on répète les étapes D0 à D9.

### 7.1 Description d'un premier mode de réalisation de l'invention

7.1.1 Procédé de codage selon le premier mode de réalisation de l'invention

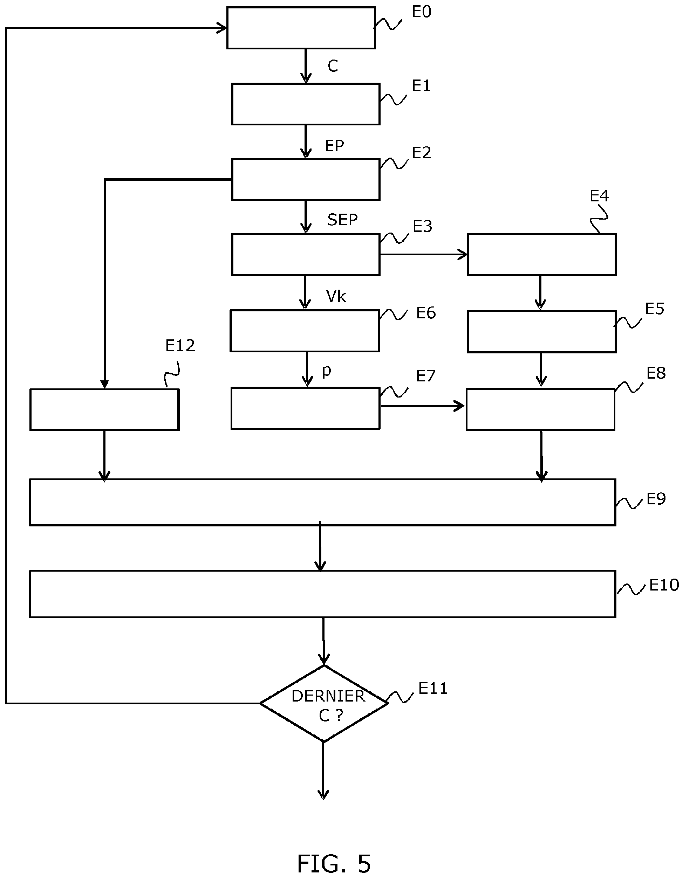

Dans l'exemple de réalisation de l'invention qui va être maintenant détaillé en relation avec la Figure **5,** on considère des éléments de description d'un type particulier, par exemple des signes de coefficients transformés et quantifiés du bloc courant RQ. Bien sûr, l'invention n'est pas limitée à ce type d'éléments et s'applique à tout autre élément de description du bloc courant. D'autres exemples seront présentés ci-après.

Au cours d'une étape E2 on sélectionne une séquence d'éléments de description du bloc courant à prédire SEP.

Par exemple, on commence par définir un sous-ensemble initial d'éléments de description à prédire. Par exemple il s'agit de tous les signes des coefficients résidus transformés quantifiés RQ[i] non nuls du bloc courant.

De façon avantageuse, on exploite la connaissance d'un contexte $Cx_j$ associé à chaque coefficient parmi une pluralité J de contextes prédéterminés, avec J entier non nul et j entier compris entre 1 et J. Un tel contexte est défini par au moins une caractéristique du coefficient ou du bloc dont il est issu.

De façon avantageuse, on considère les caractéristiques suivantes :

- la taille du bloc résidu quantifié RQ,
- l'amplitude du coefficient quantifié RQ[i],
- la fréquence du coefficient ou indice i dans le bloc RQ,
- le mode de prédiction du bloc courant $M_k$ parmi les K modes possibles.

En effet, la prédiction du signe est d'autant plus fiable que l'amplitude est élevée. De même, il a été constaté que lorsque le bloc est de taille plus grande, la fréquence du coefficient plus faible, la prédiction est plus fiable. Enfin, il a été constaté que la prédiction est plus fiable lorsque le bloc courant est associé à une prédiction intra d'un certain type.

De façon alternative, d'autres contextes sont envisageables. Ainsi, il est possible de tenir compte du type d'image dans lequel se trouve le bloc courant, par exemple du type Intra ou Inter, connu de la norme HEVC, en fonction de l'énergie du prédicteur P, ou encore en fonction du nombre total de coefficients non nuls dans le bloc courant.

Ensuite, on sélectionne les signes des coefficients du bloc RQ de l'ensemble initial, en fonction d'un score prédéterminé $S_j$, pour le contexte $Cx_j$ associé au coefficient RQ[i] considéré.
Un tel score Sj est représentatif d'un niveau de fiabilité de la prédiction du signe du coefficient RQ[i].

Par exemple, le score $S_j$ prend des valeurs dans un ensemble prédéterminé, par exemple de 0 à 10.

Selon une variante, le score est une simple indication binaire, dont l'une des deux valeurs indique que le signe peut être prédit, et l'autre que le signe ne peut pas être prédit.

Selon une autre variante, les scores $S_j$ correspondent à des probabilités connues a priori, dépendantes du contexte Cxj associé au coefficient RQ[i]. On dispose, dans l'encodeur, d'un ensemble de probabilités de détection correcte des signes des coefficients RQ. Par exemple cet ensemble de probabilités est stocké en mémoire.

Ces probabilités ont été construites avant l'encodage et le décodage, soit par accumulation statistique sur un ensemble de signaux représentatifs des signaux à coder, soit par calcul mathématique à partir d'hypothèses sur la distribution des signes des coefficients. Pour un coefficient RQ[i] associé au contexte $Cx_j$, on peut donc obtenir le score $S_j[i]$ en calculant la probabilité p[l][mk][i][|RQ[i]|] de prédiction correcte du signe du coefficient RQ[i].

Avantageusement, les signes à prédire sont sélectionnés par seuillage des scores auxquels ils sont associés. Ainsi, pour chaque coefficient RQ[i] qui a un signe (c'est-à-dire, qui n'est pas nul) et qui est associé à un contexte $Cx_j$ de score $S_j$, on prédit le signe si et seulement si $S_j > Th$, où Th est un seuil prédéterminé, par exemple égal à 0,7. Par exemple, le seuil Th est connu du codeur et du décodeur.

Selon une variante, le seuil Th peut être choisi en cours de codage et inscrit dans le fichier compressé ou dans le train binaire comprenant les données codées représentatives de l'image numérique Im. Par exemple, si l'unité qui effectue l'encodage ne dispose pas d'assez de ressources de calcul à un moment donné, il lui est possible d'augmenter ce seuil Th de façon à prédire moins de signes, et donc mettre en œuvre moins de calculs.

Il serait également possible de faire varier le seuil Th en fonction du contenu des images à coder : une image comportant beaucoup de contenu, tel que des variations de luminosité importantes ou des mouvements nombreux utiliserait un seuil élevé, et une image comportant peu de contenu tel que des variations de luminosité faibles ou mouvements peu nombreux, utiliserait un seuil Th plus bas, de façon à lisser la complexité ou la mémoire nécessaire au codage de chaque image.

A l'issue de cette sélection, les signes des coefficients RQ[i] sélectionnés sont tous associés à un contexte $Cx_j$ et à un score $S_j$ supérieur au seuil Th prédéterminé et forment un ensemble SE d'éléments EP de description à prédire.

Avantageusement, on ordonne les éléments de description à prédire EP en une séquence SEP. Cet ordre peut être prédéfini, et par exemple correspondre à l'ordre de balayage (pour « scanning », en anglais) des signes, tel que défini dans la norme HEVC. De façon préférentielle, on les ordonne en fonction de leur score associé. Par exemple si le score utilisé est représentatif d'une probabilité de prédiction correcte, on ordonne les éléments par score décroissant. On obtient une séquence $Seq_i$ dite initiale, d'éléments de description à prédire. Supposons que l'on dispose à ce stade de M signes ordonnés à prédire $Seq_i = \{EP_0 = s_0, EP_1 = s_1, ..., EP_{M-1} = s_{M-1}\}$.

Au cours d'une étape E10, on encode de façon classique les éléments de description ENP qui n'appartiennent pas au sous-ensemble SE sélectionné. Cette étape met en œuvre des techniques de codage connues de l'homme de métier. Pour les signes des coefficients RQ[i] par exemple, il est connu notamment de la norme HEVC, en particulier de l'article de Sole *et al.,* déjà cité, le fait de transmettre chaque signe sous forme d'un élément binaire 0 ou 1, avec une convention associant l'un au signe plus et l'autre au signe moins.

En E3, on évalue les différentes possibilités ou hypothèses de combinaisons de valeurs de la séquence SEP d'éléments à prédire, à l'aide d'une fonction de vraisemblance V prédéterminée qui peut être aussi considérée comme l'inverse d'une fonction de coût CT. On suppose qu'on a K hypothèses $H_k$ ou combinaisons possibles, avec K entier non nul. Dans le cas où les éléments de description à prédire sont les M signes $S_m$ d'une séquence, un signe pouvant prendre la valeur + ou la valeur -, le nombre de combinaisons possibles est $K = 2^M$.

Par exemple, pour une hypothèse donnée cette fonction produit un coût, par exemple :

$$FV(\{s0 = -, s1 = +, s2 = -, s3 = -, ..., sM-1 = +) = CT = 4240$$

Ici, l'hypothèse $H_k$ est {-,+,-,-,...,+} et le coût résultant est 4240. Bien sûr, la fonction de vraisemblance doit faire en sorte de générer un coût minimal lorsque l'hypothèse de signes est la plus vraisemblable. Il existe plusieurs fonctions FV de vraisemblance/coût connues de l'état de l'art et présentées dans l'article de Koyama *et al,* [CITER REF].

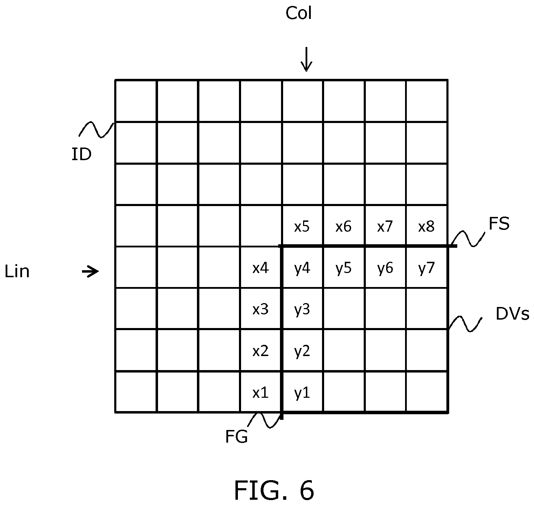

De façon avantageuse, on utilise une fonction de vraisemblance qui consiste à mesurer la distorsion le long de frontières gauche FG et supérieure FS du bloc courant avec des blocs précédemment traités. En relation avec la Figure **6,** on a représenté une image décodée ID et un bloc décodé virtuel DVs de taille NxN pixels de cette image avec l'hypothèse de combinaison de signes dont on veut mesurer la vraisemblance ou le coût. DVs(lin,col) est la valeur du pixel du bloc DVs situé sur la ligne lin et la colonne col du bloc.

On considère un opérateur « Side Matching » $SM(\Im, B))$, avec $\Im$ image courante et C bloc courant. Il est défini comme suit :

$$SM(\Im, C) = \sum_{a=0}^{N-1} \left( C(0,a) - \Im(lin-1, col+a) \right)^2 + \sum_{a=0}^{N-1} \left( C(a,0) - \Im(lin+a, col-1) \right)^2$$

avec C(i,j) la valeur des coefficients dans le bloc décodé virtuel DVs, avec i, j entiers compris entre 0 et N-1.

Sur la figure **6** on a représenté les pixels situés le long de la frontière gauche FG dont les valeurs sont de bas en haut $y_1$ à $y_4$ et situés les pixels situés le long de la frontière supérieure FS du bloc décodé virtuel DVs dont les valeurs sont de gauche à droite $y_4$ à $y_7$, ainsi que les pixels $x_1$ à $x_4$ et $x_4$ à $x_8$ respectivement situés de l'autre côté des frontières FG et FS.

Appliquer cet opérateur revient à former la somme $(x_1-y_1)^2 + (x_2-y_2)^2 + (x_3-y_3)^2 + (x_4-y_4)^2 + (x_5-y_4)^2 + (x_6-y_5)^2 + (x_7-y_6)^2 + (x_8-y_7)^2$.

On détermine le bloc décodé virtuel optimal DVopt qui minimise cette mesure :

$$DV_{opt} = argmin_{DV_s} SM(ID, DV_s)$$

où ID représente l'image reconstruite après décodage.

Alternativement, la fonction de vraisemblance utilisée minimise l'erreur avec un bloc prédicteur P du bloc courant. Cela consiste à sélectionner le bloc décodé virtuel qui minimise l'erreur avec le prédicteur P.

Le résidu virtuel associé au bloc décodé virtuel optimal est ainsi identifié.

Bien sûr, on pourrait recourir à d'autres fonctions de vraisemblance ou de coût, tels que par exemple un critère de minimisation d'une mesure de distance/proximité à une valeur prédéterminée, par exemple moyenne ou la minimisation de l'énergie du bloc résidu.

Pour générer un bloc courant décodé correspondant à une hypothèse de signes $H_k$, on procède de la façon suivante :

- on attribue à chaque coefficient du bloc résidu courant son signe réel (s'il s'agit d'un coefficient dont le signe n'est pas prédit), ou l'hypothèse de signe (s'il s'agit d'un coefficient dont le signe est à prédire).
- à l'aide des moyens classiques de déquantification et de transformée inverse, on obtient un bloc de résidu décodé, dont les échantillons {r1,r2,...,r7} voisins des bloc précédemment décodés sont ajoutés aux éléments prédits correspondants du bloc P pour former les éléments reconstruits y1 = r1 +p1,y2 = p2 + r2, y7=p7+r7 du bloc décodé virtuel DV, comme indiqué sur la figure **6.**

Le bloc décodé virtuel obtenu DV est utilisé pour calculer le coût $CT_k$ associé à l'hypothèse de combinaison Hk évaluée.

Dans la suite, on considère que la séquence initiale $SEP_i$={$s_0,s_1,s_2$} compte 3 signes à prédire. On suppose que les valeurs réelles de la séquence initiale sont $s_0$ = -, $s_1$ = + et $s_2$ = -.

On évalue donc les coûts $CT_k$ des 8 hypothèses suivantes :

CT$_0$=FV({+,+,+})
CT1=FV({+,+,-})
CT2=FV({+,-,+})
CT3=FV({+,-,-})
CT4=FV({-,+,+})
CT5=FV({-,+,-})
CT6=FV({-,-,+})
CT7=FV({-,-,-})

On identifie la combinaison H2 associée au coût minimal $CT_2$ donc à la vraisemblance maximale $V_2$.

En E4, on prédit la séquence d'éléments de prédiction SEP à l'aide de la combinaison H2 identifiée.

En E5, on dérive une valeur d'un indicateur de prédiction IP correspondant. Dans ce mode de réalisation, on détermine un indicateur de prédiction par élément binaire de la séquence SEB. Pour ce faire, on compare la valeur prédite H2 à la valeur réelle de la séquence SEB. Par exemple, pour le premier signe s0, l'indicateur IP0 indique si le signe prédit pour s0 est égal à ou différent du signe réel. Par exemple, il vaut 0 si le signe prédit et le signe réel sont égaux, 1 sinon. En l'espèce, la valeur prédite est un +, la valeur réelle un -, donc l'indicateur IP du premier signe s0 est fixé à 1. On réalise la même opération pour les autres signes de la séquence. On obtient ainsi une séquence de M indicateurs de prédiction, ou séquence de résidus de signes.

Il s'agit maintenant de coder la séquence d'indicateurs de prédiction obtenue.

Pour ce faire on utilise classiquement un codeur entropique, par exemple un codeur de Huffman, un codeur arithmétique, un codeur CABAC tel qu'utilisé dans la norme HEVC. En effet, du fait que la prédiction est réalisée avec une probabilité de réussite supérieure à un seuil (dans le mode de réalisation préféré), il y a plus souvent des 1 que des 0. Ceci est mis à profit par le codage entropique pour réduire la taille du signal compressé.

En général, le codeur entropique utilise un paramètre de codage représentatif d'une densité de probabilité associée à l'élément à coder. Ainsi, si l'élément à coder est binaire, on n'utilisera pas le même codeur entropique si les deux valeurs de l'élément binaire ont une probabilité d'apparition de 0.9 et 0.1 respectivement, ou de 0.6 et 0.4 respectivement. On notera qu'il est possible d'utiliser pour ces deux cas, soit deux codeur entropiques différents (par exemple, deux codes de Huffman différents), soit un même codeur entropique paramétré de deux façons différentes (dans le cas d'un codeur entropique qui soit paramétrable, comme par exemple le codeur entropique CABAC, pour lequel on utilisera deux contextes différents).

En E6, on évalue une mesure de disparité DV des valeurs de vraisemblance.

D'une façon générale, une mesure de disparité est une mesure qui est d'autant plus grande que les valeurs de vraisemblance sont différentes entre elles. Ainsi, il est par exemple possible d'utiliser comme mesure de disparité :

- la variance des valeurs de vraisemblance ;
- l'écart-type des valeurs de vraisemblance ;
- la valeur absolue de la différence entre la plus grande et la plus petite des valeurs de vraisemblance ;
- la moyenne de la valeur absolue des différences entre les valeurs de vraisemblance et leur moyenne ; ou
- l'entropie des valeurs de vraisemblance.

Selon l'invention, en E7, on détermine au moins un paramètre p de codage en fonction de la disparité DV évaluée.

Selon ce mode de réalisation de l'invention, le paramètre p est calculé de la façon suivante :

$$M=\max(V(+),V(-))$$

$$m=\min(V(+),V(-))$$

$$p=0.5+0.5*(1-m/M).$$

où V(+) désigne la vraisemblance du signe + pour la séquence d'éléments binaires courante, V(-) la séquence du signe -.

Avantageusement, lorsque le codeur entropique est de type CABAC, p est la probabilité utilisée pour initialiser le contexte CABAC servant à coder l'information IP associée à chaque signe de la séquence SEB.

Selon une variante, la probabilité utilisée pour coder entropiquement l'information est dépendante de l'intervalle prédéterminé dans lequel se trouve une valeur dépendante de V(+) et V(-). Ainsi, on calcule le ratio R=M/m.

En fonction de ce ratio, on définit préalablement la probabilité avec laquelle coder l'information, comme suit :

R → proba Table :
1<=R<2 → p=0.5
2<=R<4 → p=0.6
4<=R<8 → p=0.7
8<=R<16 → p=0.8
16<=R → p=0.9

Selon une autre variante, on dérive une valeur de probabilité initiale p_init d'informations contextuelles liées au signe à prédire. Par exemple, p_init peut être égale à la probabilité p[l][mk][i][|RQ[i]|] de prédiction correcte du signe du coefficient RQ[i]. Ensuite, la probabilité p à utiliser est calculée en fonction de la valeur de p_init et de V(+) et de V(-). Par exemple, on a :

$$p=p\_init *(max(M/m, 2)$$

On suppose maintenant que l'information complémentaire à transmettre peut prendre 4 valeurs différentes : A,B,C,ou D. Si la disparité DV mesurée est inférieure à un seuil T, le code binaire utilisé pour le codage est par exemple le suivant :

A : 00
B : 01
C :10
D :11

En revanche, si la disparité est supérieure à ce seuil, on utilise un autre code:

A : 0
B : 10
C :110
D :111

Dans ce cas, la disparité est exploitée pour déterminer un paramètre de codage qui comprend l'identifiant d'un code binaire particulier ou d'un codeur particulier parmi un ensemble prédéterminé de codes binaires respectivement de codeurs.
En E8, on code la séquence d'indicateurs de prédiction obtenue à l'aide du codeur entropique paramétré avec p.
En E9, on construit le bloc décodé, en appliquant au résidu quantifié RQ des étapes de déquantification et de transformée inverse (connues en soi). On obtient un bloc résidu décodé RD. On ajoute à RD le bloc prédicteur P pour obtenir le bloc décodé BD. Au cours de cette étape on vient également ajouter le bloc décodé BD à l'image reconstruite ID. Ceci permet de disposer dans le codeur d'une version décodée de l'image courante. Cette version décodée est utilisée dans notamment au cours de l'étape de construction d'une prédiction des signes sélectionnés pour être prédits.
En E10 on insère la séquence d'indicateurs de prédiction codée ainsi que la séquence codée correspondant aux éléments de description non prédits, dans le flux de données codées ou train binaire TB.
En E11, on teste s'il reste un bloc à coder. Si c'est le cas, on répète les étapes E1 à E11.

7.1.2 Variante dite « mix-incrémentale »

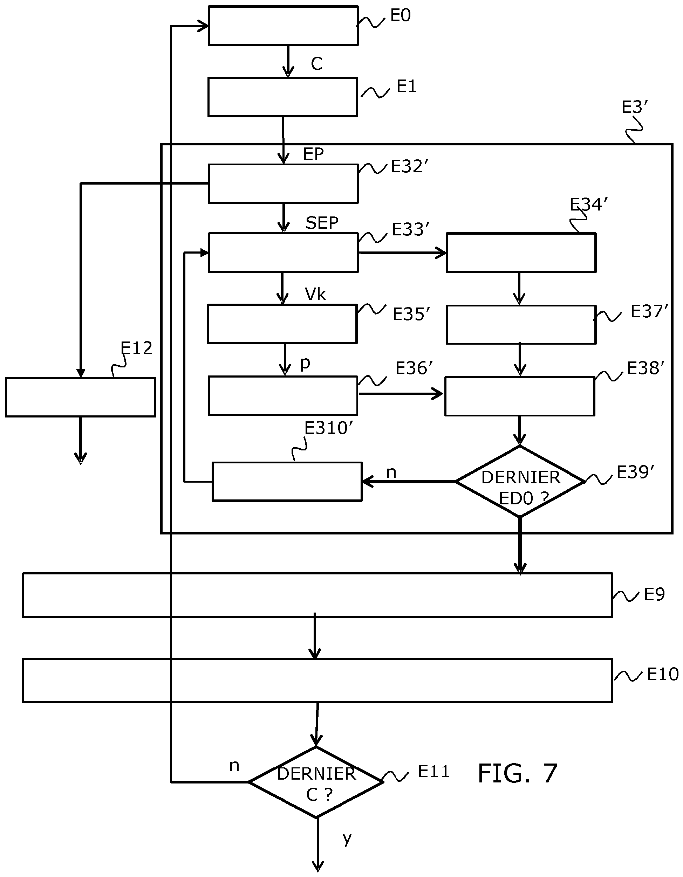

En relation avec la Figure **7,** on présente maintenant une variante du mode de réalisation précédent selon laquelle l'invention s'applique au premier élément de prédiction d'une séquence d'éléments de prédiction.
A la fin de l'étape E2, on dispose d'une séquence d'éléments de description à prédire SEP.
On réalise ensuite en E3' les étapes suivantes selon une boucle itérative qui sera répétée autant de fois que le nombre M d'éléments de description à prédire sélectionnés dans la séquence SEP. En E31' on sélectionne une séquence courante $Seq_c$ que l'on initialise à la séquence initiale SEP.
Au cours de la première itération, l'élément à prédire est le premier élément de la séquence courante qui comprend M éléments, par exemple le signe ED0 = s0. On évalue en E33' le coût des 2M hypothèses possibles comme déjà décrit et on identifie la combinaison associée au coût minimal. Supposons qu'il s'agisse de $CT_2$.
Au cours d'une étape E34', on prédit le premier élément s0 de la séquence courante Seqc par la valeur qu'il prend dans l'hypothèse $H_2$. Dans l'exemple considéré, cette valeur est +.
En E35', on détermine l'information complémentaire IC qui correspond ici à l'indicateur de prédiction IP correspondant. Pour ce faire, on compare la valeur prédite de s0 à sa valeur réelle, comme déjà décrit. En l'espèce, la valeur prédite est un +, la valeur réelle un -, donc l'indicateur IP du premier signe ED0 est fixé à 1.
En E36', on évalue une mesure de disparité DV des valeurs de vraisemblance obtenues pour la pluralité d'hypothèses évaluées.
En E37', on détermine au moins un paramètre p de codage en fonction de la disparité DV évaluée, comme décrit précédemment.
En E38', on code l'indicateur IP obtenu avec un codeur entropique paramétré par p.
En E39', on teste si le premier signe $s_0$ est le dernier de la séquence courante. Si c'est le cas, le traitement de l'étape E3' est fini, car la séquence ne comprenait qu'un seul élément. Sinon, on met à jour en E310' la séquence SEP en supprimant le premier élément ED0 = s0.

Ensuite, on réalise une deuxième itération de E3'.

Au cours de la deuxième itération, on traite l'élément $s_1$, devenu premier de la nouvelle séquence courante. Les étapes E31' à E39' sont répétées.

A ce stade deux modes de réalisation de l'étape E31'sont envisagés :

Selon une première option, on réutilise les coûts associés aux hypothèses de la séquence précédente. On suppose donc qu'elles ont été enregistrées dans une mémoire. Parmi les K hypothèses de la première itération, on élimine celles pour lesquelles $s_0$ n'a pas sa valeur réelle. On ne conserve donc que les 4 hypothèses CT4 à CT7 pour lesquelles $s_0$ vaut -, et leurs coûts associés :

$$CT_4 = FE(\{-,+,+\})$$
$$CT_5 = FE(\{-,+,-\})$$
$$CT_6 = FE(\{-,-,+\})$$
$$CT_7 = FE(\{-,-,-\})$$

De nouveau on identifie celle qui obtient le coût minimal. Par exemple, on suppose qu'il s'agit de H6 avec le coût $CT_6$.

Selon une deuxième option, on recalcule en E33' les coûts associés aux combinaisons de la nouvelle séquence courante. La nouvelle séquence courante $Seq_c$ comprend M=2 éléments. Il y a K = $2^2$ combinaisons possibles. On évalue donc les 4 hypothèses à l'aide d'une fonction de coût/vraisemblance. Elle peut être différente de celle mise en œuvre à la première itération. Par exemple, on utilise une mesure de l'énergie des coefficients du bloc résidu virtuel décodé DVs et on choisit l'hypothèse qui minimise cette mesure. Cette fonction de coût est plus précise, mais aussi plus complexe à calculer et donc mieux adaptée à des séquences plus courtes.

On comprend que selon cette deuxième option les combinaisons et les coûts calculés pour une itération précédente ne nécessitent pas d'être conservés pour l'itération suivante.

En E34', on prédit le signe $s_1$ à - ce qui correspond à sa valeur dans la combinaison sélectionnée.

En E35', on calcule l'indicateur de prédiction IP correspondant. La valeur réelle de s1 étant égale à +, l'indicateur IC vaut 1.

En E36', on évalue une mesure de disparité DV des valeurs de vraisemblance obtenues pour la pluralité d'hypothèses évaluées.

En E37', on détermine au moins un paramètre p de codage en fonction de la disparité DV évaluée.

En E38', on code l'indicateur IC obtenu pour s1 avec un codeur entropique paramétré par p.

En E39', on teste si le signe $s_1$ est le dernier de la séquence courante.

Ce n'est pas le cas, on met donc à jour la séquence courante en supprimant $s_1$. La nouvelle séquence courante ne comprend plus que le signe $s_2$.

On réalise la troisième et dernière itération de façon similaire.

En $E3_2'$, sachant que so vaut - et $s_1$ vaut +, les combinaisons de valeurs possibles restantes sont $CT_4$ et $CT_5$. On suppose que le coût minimal est $CT_5$. On prédit donc s2 en E34' à partir de la combinaison $H_4$.

En $E3_5'$, on calcule l'indicateur de prédiction IC correspondant. La valeur réelle de $s_2$ étant égale à +, l'indicateur IP indique une prédiction correcte et vaut 0.

En E36', on évalue une mesure de disparité DV des valeurs de vraisemblance obtenues pour la pluralité d'hypothèses évaluées.

En E37', on détermine au moins un paramètre p de codage en fonction de la disparité DV évaluée.

En E38', on code l'indicateur IC obtenu pour s2 avec un codeur entropique paramétré par p.

En E39', on teste s'il reste des éléments de description à traiter dans la séquence. s2 étant le dernier, le traitement de l'étape de codage E3' est terminé.

Dans la variante qui vient d'être présentée, les itérations de l'étape E3' s'appliquent au premier élément de la séquence, laquelle est mise à jour par suppression du premier élément une fois traité. Ce mode de réalisation présente l'avantage de réduire à chaque itération la longueur de la séquence courante à traiter.

Néanmoins, l'invention ne se limite pas à ce choix d'implémentation. On peut alternativement conserver la séquence initiale et faire progresser l'indice de l'élément courant à chaque nouvelle itération de l'étape E3'. Dans ce cas, l'option qui consiste à calculer préalablement les coûts associés à toutes les combinaisons de valeurs possibles de la séquence initiale et à les mémoriser, est la plus adaptée.

Dans un deuxième mode de réalisation de l'invention, on sélectionne des éléments de description à prédire d'un autre type que les signes. On considère en particulier l'élément de description M indicatif du mode de prédiction INTRA/INTER (dans la norme HEVC, un tel élément de description porte le nom « pred_mode_flag »), l'élément de description A indicatif de l'amplitude du premier coefficient résidu quantifié pour le bloc courant (dans la norme HEVC, un tel élément de description porte le nom « coeff_abs_level_remaining ») et l'élément de description T indicateur de l'utilisation ou non d'une transformée inverse (dans la norme HEVC, un tel élément de description porte le nom « transform_skip_flag »).

Dans la norme HEVC par exemple, un élément M peut prendre une valeur comprise entre 0 et 34. Un élément A peut prendre des valeurs comprises entre 0 et $2^{16}-1$.

Pour le bloc courant, l'ensemble de départ est constitué des éléments de description {M, A,T}. On considère dans cet exemple que, pour le bloc courant C, et en fonction des informations contextuelles, il est trouvé lors de l'étape E2 que le score de T est inférieur au seuil nécessaire Th, tandis que M et A ont un score supérieur. Le sous-ensemble SE est donc {M,A}.

7.1.3 Procédé de décodage selon le premier mode de réalisation de l'invention

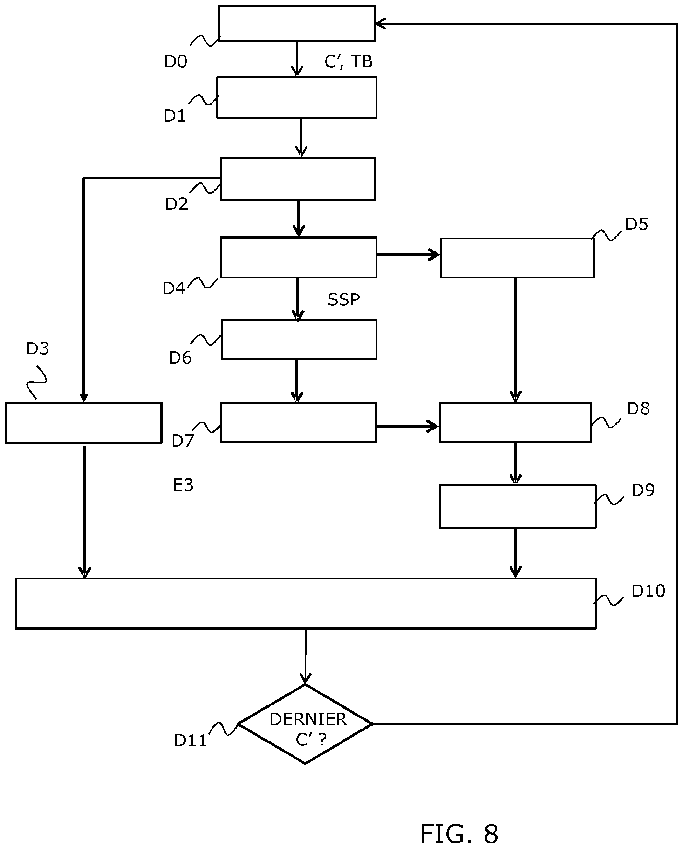

En relation avec la Figure **8,** on présente maintenant les étapes du procédé de décodage d'une image numérique codée selon le premier mode de réalisation de l'invention. On suppose qu'un train binaire TB a été reçu par un dispositif de décodage mettant en œuvre le procédé de décodage selon l'invention. En variante, le dispositif de décodage obtient un fichier compressé FC.

En D0, on commence par sélectionner comme bloc courant C' le premier bloc à traiter. Par exemple, il s'agit du premier bloc (dans l'ordre lexicographique). Ce bloc comporte NxN pixels.

En D1, on traite le bloc C' courant en mettant en œuvre le schéma de décodage, correspondant au schéma de codage utilisé par l'encodeur, par exemple tel que spécifié dans la norme HEVC. En particulier, au cours de cette étape, on identifie un ensemble d'éléments ED de description des données à décoder pour le bloc courant C'.

On réalise en outre une prédiction P' du bloc à décoder C'. Les informations de prédiction liées à P' sont lues dans le train binaire ou fichier compressé et décodées. On décode donc l'information de mode de prédiction.

On décode aussi les informations d'amplitude du résidu à décoder RQ' sont lues dans le train binaire ou le fichier compressé et décodées. On connait donc maintenant les amplitudes des RQ'[i], mais pas encore les signes.

En D2, le procédé de décodage selon l'invention met en œuvre l'étape de sélection des éléments de description à prédire parmi les éléments de description déterminés. Cette étape a déjà été décrite en détails pour le procédé de codage en relation avec les Figures **2** et **3.** Les éléments de description à prédire sont avantageusement sélectionnés en fonction de scores prédéterminés. Un ensemble SE est obtenu.

A l'issue de cette étape, on connait les valeurs décodées des éléments de description du bloc qui n'ont pas été prédits parce qu'ils étaient associés à un score Sj inférieur à un seuil Th prédéterminé.

Au cours d'une étape D3, le procédé lit dans le train binaire TB les données codées relatives aux éléments de description du bloc courant non prédits et les décode.

En D4, on évalue les différentes possibilités ou hypothèses de combinaisons de valeurs de la séquence SEP d'éléments à prédire, à l'aide de la même fonction de vraisemblance V que celle utilisée par le procédé de codage qui a produit le train binaire à décoder.

En D5, on sélectionne la meilleure hypothèse au sens d'une fonction de vraisemblance parmi les combinaisons de valeurs possibles de la séquence courante $Seq_c$, comme prédiction de la séquence SEB.

En D6, on évalue une mesure de disparité DV des valeurs de vraisemblance obtenues pour la pluralité d'hypothèses évaluées.

En D7, on détermine au moins un paramètre p de codage en fonction de la disparité DV évaluée.

En D8, on décode du train binaire l'information IP correspondant à la séquence SEB avec un décodeur entropique paramétré par p.

On passe ensuite à l'étape D9 de reconstruction du bloc courant C' à partir des éléments de description décodés, EP prédits ($D_5$) et ENP non prédits ($D_3$), des informations d'amplitude des coefficients du bloc résidu RQ' et de la prédiction P' obtenus en $D_1$.

Pour ce faire, on commence par déquantifier le bloc RQ' pour obtenir un bloc déquantifié. Ceci est réalisé par des moyens adaptés à la quantification utilisée lors du codage (déquantification scalaire, déquantification vectorielle...), connus de l'homme de métier.

On applique ensuite au résidu déquantifié une transformée inverse de celle utilisée au codage. On obtient alors le résidu décodé.

On reconstruit en D10 le bloc décodé BD' en ajoutant le résidu décodé à la prédiction P'.

Ce bloc est intégré à l'image en cours de décodage.

Au cours d'une étape D11, on vient tester si le bloc courant est le dernier bloc à traiter, compte tenu de l'ordre de parcours des blocs, défini précédemment. Si oui, le décodage est terminé. Si non, l'étape suivante est l'étape $D_0$ de sélection du bloc suivant et les étapes du procédé de décodage sont répétées.

7.1.4 Procédé de décodage selon la variante « mix-incrémentale »

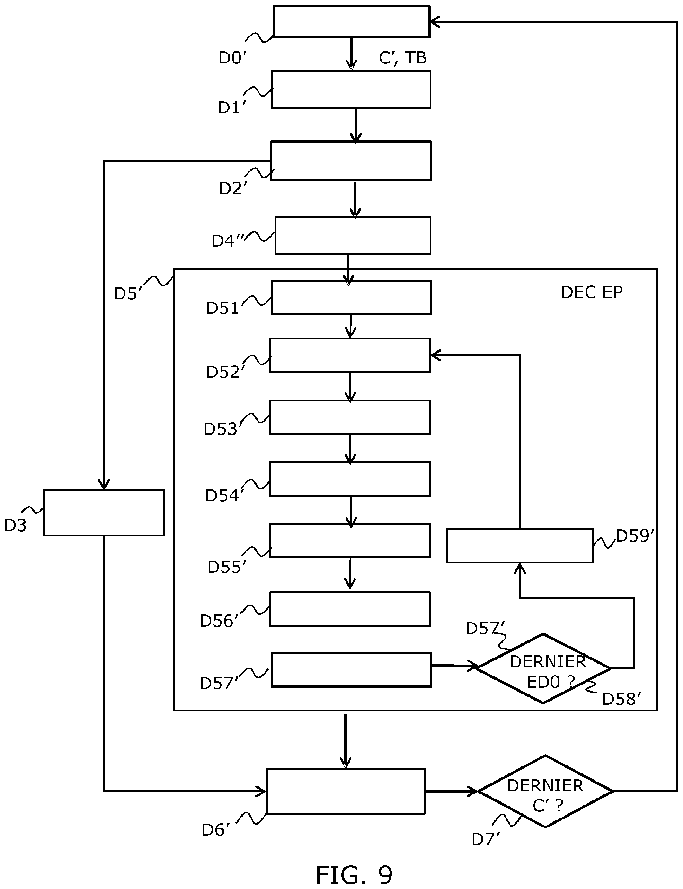

Selon cette variante, illustrée par la Figure **9,** on ordonne en D4' les éléments de l'ensemble SE obtenu en une séquence initiale $Seq_i$, par scores décroissants, comme déjà décrit pour le procédé de codage.

On met en œuvre une étape D5' d'évaluation des hypothèses de combinaison de la séquence SEB sélectionnée. Elle comprend les sous-étapes suivantes

En $D5_1$' on considère une séquence courante $Seq_c$ que l'on initialise à la séquence initiale SEB.

Les étapes suivantes (D52' à D57') forment une boucle itérative qui sera répétée plusieurs fois, en fonction du nombre M d'éléments de description à prédire sélectionnés dans la séquence Seqc.

En D52', on sélectionne la meilleure hypothèse au sens d'une fonction de vraisemblance FV, la même que celle utilisée par le procédé de codage qui a produit le train binaire à décoder, parmi les combinaisons de valeurs possibles de la séquence courante $Seq_c$. Comme déjà évoqué pour le procédé de codage, il existe plusieurs fonctions d'évaluation possibles. Dans la suite, on considère une mesure de distorsion le long d'une frontière avec des blocs précédemment traités et on sélectionne la combinaison de valeurs qui minimise cette mesure.

Au cours d'une première itération, on décode le premier élément de description de la séquence $Seq_c$. Dans la suite, on suppose que les éléments de description sont des signes.

A l'aide de la fonction de coût, on génère les coûts correspondant à chaque hypothèse ou combinaison possible pour l'ensemble des signes à prédire. Ainsi, supposons que M=3, et $Seq_c=\{s_0,s_1,s_2\}$. On va générer les coûts suivants :

$$CT_0=FE(\{+,+,+\})$$

$$CT_1=FE(\{+,+,-\})$$

$$CT_2=FE(\{+,-,+\})$$

$$CT_3=FE(\{+,-,-\})$$

$$CT_4=FE(\{-,+,+\})$$

$$CT_5=FE(\{-,+,-\})$$

$$CT_6=FE(\{-,-,+\})$$

$$CT_7=FE(\{-,-,-\})$$

Ce sont les 8 coûts correspondant aux 8 hypothèses possibles sur les signes à prédire. On suppose que le coût minimal est $CT_2$.

En D53', on prédit la valeur du premier signe s0 par sa valeur dans la combinaison $H_2$. Il s'agit d'un +.

En D54', on évalue une mesure de disparité DV des valeurs de vraisemblance obtenues pour la pluralité d'hypothèses évaluées.

En D55', on détermine au moins un paramètre p de codage en fonction de la disparité DV évaluée.

En D56', on décode l'indicateur de prédiction IC correspondant à ce premier signe s0, à partir de données codées extraites du train binaire ou fichier compressé. Cet indicateur indique si le signe prédit a été correctement prédit ou non. Par exemple, on suppose que la valeur décodée est un 1 et qu'elle est associée à une prédiction incorrecte.

En D57, on en déduit que la valeur décodée du signe s0 est un -.

En D58', on teste si l'élément $s_0$ est le dernier de la séquence courante. Si c'est le cas, le traitement s'achève. Sinon, on met à jour la séquence courante en D59' en supprimant l'élément $s_0$ qui vient d'être décodé.

Au cours d'une deuxième itération, on traite le deuxième élément $s_1$, devenu premier de la séquence courante.

En D52', on considère les combinaisons $Cb_k$, pour lesquelles $s_0$ a sa valeur décodée, les autres étant éliminées.

Dans l'exemple considéré, la valeur réelle de ED0 = $s_0$ est -, donc on compare les coûts suivants :

$$CT_4=FV(\{-,+,+\})$$

$$CT_5=FV(\{-,+,-\})$$

$$CT_6=FV(\{-,-,+\})$$

$$CT_7=FV(\{-,-,-\})$$

Ces 4 coûts correspondent aux 4 hypothèses possibles sur les signes qui restent à prédire, connaissant la valeur décodée de celui qui a déjà été traité.

$H_6$ est identifié comme le coût minimal.

En D53', on prédit $s_1$ par sa valeur dans la combinaison $Cb_6$, c'est-à-dire un -.

En D54', on évalue une mesure de disparité DV des valeurs de vraisemblance obtenues pour la pluralité d'hypothèses évaluées.

En D55', on détermine au moins un paramètre p de codage en fonction de la disparité DV évaluée.

En D56', on décode l'indicateur IC correspondant à partir des données codées extraites du train binaire ou fichier compressé. Un indicateur est décodé, qui indique si le signe prédit est égal ou différent du signe réel. Dans notre exemple, supposons que la valeur décodée de IP soit 0, ce qui signifie que la prédiction de ce signe s1 est correcte.

En D57', on en déduit que s1 vaut -.

En D58', on teste si s1 est le dernier élément. Comme ce n'est pas le cas, on met à jour la séquence courante en D59', en supprimant s1. La nouvelle séquence $Seq_c$ est réduite à l'élément $s_2$.

Au cours d'une troisième et dernière itération, on décode le dernier signe $s_2$.

En D52', on considère les combinaisons de valeurs de la séquence initiale $Seq_i$ pour lesquelles les éléments de description déjà traités s0 et s1 prennent leur valeur décodée.

On compare donc les coûts suivants :

$$CT_6=FE(\{-,-,+\})$$

$$CT_7=FE(\{-,-,-\})$$

On identifie $CT_6$ comme le coût minimal.

Alors, le dernier signe $s_2$ dans l'ordre prédéfini est prédit, en $D4_3$', par sa valeur dans la combinaison $H_6$ : il s'agit d'un +.

En D53', on évalue une mesure de disparité DV des valeurs de vraisemblance obtenues pour la pluralité d'hypothèses évaluées.

En D54', on détermine au moins un paramètre p de codage en fonction de la disparité DV évaluée.

Ensuite, un indicateur IC associé au signe $s_2$ est décodé en D56'. Il indique si le signe $s_2$ a été correctement prédit ou non. Dans notre exemple, supposons que la valeur décodée soit 0, ce qui correspond à une prédiction correcte.

On en déduit en D57' que la valeur décodée de $s_2$ est le signe +.

En D58', on constate que $s_2$ est le dernier élément à traiter.

Comme pour l'encodage, on notera que l'invention ne se limite pas au mode de réalisation qui vient d'être présenté. D'autres choix d'implémentation peuvent être faits, comme par exemple celui que conserver la séquence à sa longueur initiale, de mettre à jour l'indice de l'élément courant, initialisé au premier élément de description $ED_0$ et de mettre fin aux itérations une fois le dernier élément $ED_{M-1}$ traité.

On passe ensuite à l'étape D6' de reconstruction du bloc courant C' à partir des éléments de description décodés, EP prédits et ENP non prédits,des informations d'amplitude des coefficients du bloc résidu RQ' et de la prédiction P' obtenus en D1', comme déjà décrit dans le premier mode de réalisation.

Selon cette variante de réalisation de l'invention, du fait que tous les éléments de la séquence initiale sélectionnés en fonction des scores prédéterminés sont prédits, on sait donc dès l'issue de l'étape $D_2$ combien d'indicateurs de prédiction IP sont à extraire du train binaire ou du fichier compressé. On comprend que cela permet d'implémenter une mise en œuvre de l'invention qui décorrèle les opérations de lecture et d'analyse des données codées contenues dans le train binaire ou fichier compressé (pour « parsing », en anglais) des opérations de traitement du bloc courant conformément au schéma de codage/décodage mis en œuvre. Par exemple, on pourrait organiser le décodage en utilisant un composant spécifique pour l'analyse/lecture des données codées dans le train binaire et un autre pour les opérations de reconstruction des blocs décodés. Un avantage de cette indépendance de parsing est de permettre une parallélisation des opérations de décodage.

**7.2 Description d'un deuxième mode de réalisation de l'invention**

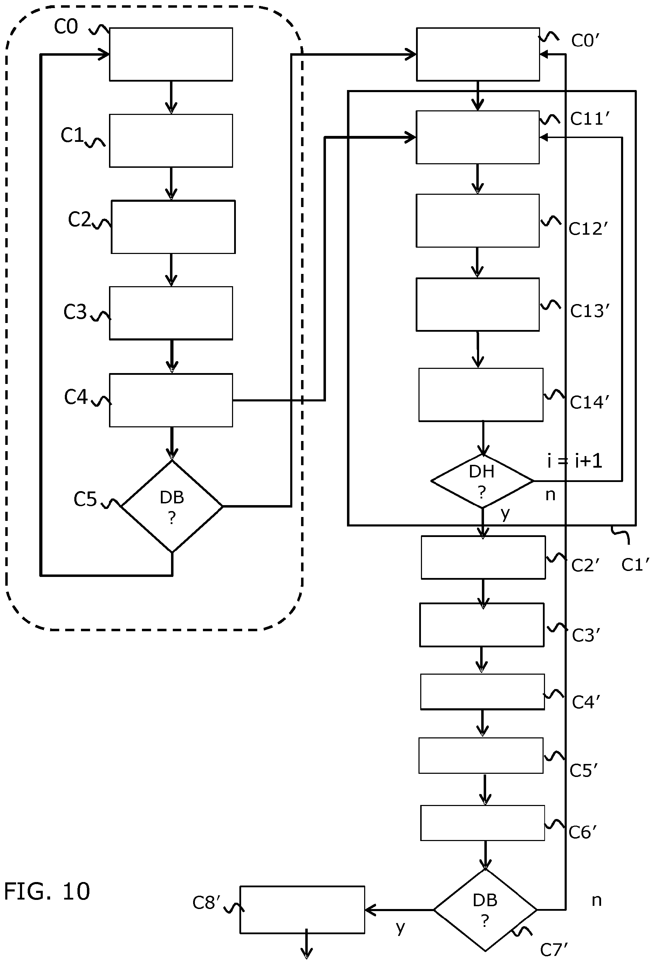

En relation avec la Figure **10,** on décrit maintenant un deuxième mode de réalisation de l'invention, selon lequel le procédé de codage selon l'invention comprend deux phases, une première phase de formation d'une première portion de flux de données codées TB1 et une deuxième phase de formation d'une deuxième portion de flux TB2.

7.2.1 Formation d'une première portion de flux

Lors de l'encodage, l'image Im est subdivisée en blocs de taille variable dont l'ordre de traitement est connu de l'encodeur et du décodeur. Chaque bloc va subir une opération d'encodage consistant en une suite d'opérations (application d'étapes de prédiction, calcul de résidu, quantification, codage entropique) qui sera détaillée par la suite.

Au cours d'une étape C0 on sélectionne comme bloc courant B le premier bloc à traiter. Dans le mode préféré de réalisation, il s'agit du premier bloc (dans l'ordre lexicographique).

Au cours d'une étape C1 on va encoder de façon classique ce bloc B, par exemple comme le décrit la norme de codage vidéo HEVC.

Cette étape consiste typiquement à prédire le bloc courant à l'aide de pixels précédemment traités dans la même image ou dans une image précédemment traitée, à produire un résidu représentatif de la différence entre la prédiction et les vraies valeurs des pixels du bloc courant, à transformer ce résidu par transformée fréquentielle comme une DCT par exemple, à quantifier ce résidu transformé. Chacune de ces opérations (non exhaustives) est susceptible de produire des éléments de description qui sont des valeurs indicatives, par exemple, du type de prédiction utilisée, du type de transformée utilisée, de la division du bloc courant en sous-blocs, de la valeur et du signe des résidus quantifiés, etc.

Au cours d'une étape C2, chaque élément de description est ensuite codé par codage entropique, par exemple de type CABAC comme spécifié dans la norme HEVC. Cette étape transforme donc les éléments de description en une suite de symboles binaires 0 et 1. Cette suite de symboles binaire représente le bloc courant.

La séquence d'éléments binaires issue de l'étape de codage entropique est ajoutée à la suite d'un train binaire intermédiaire TB0, comprenant les données codées des blocs déjà traités.

Au cours d'une étape C3, on détermine quel serait, pour le bloc courant, le premier bit qu'il serait nécessaire de lire dans le train binaire intermédiaire si l'on tentait de décoder ce flux binaire à partir de moyens classiques tels qu'un décodeur HEVC. Selon un mode de réalisation de l'invention, on a recours lors du décodage, à un pointeur de flux PF0 que l'on déplace au fur et à mesure de la lecture de données codées dans le flux.

Cette étape C3 peut être effectuée lors de l'encodage dudit bloc courant, ou encore en simulant son décodage.

Ensuite, une séquence d'éléments binaires SEB est identifiée. Il s'agit des bits consécutifs situés après (et incluant) le premier bit et avant le dernier qu'il est nécessaire de lire pour décoder le bloc courant, dans la limite de M bits, où M est un nombre fixé. Ainsi, prenons un exemple où M vaut 4, pour le bloc courant, la séquence d'éléments binaires SEB vaut par exemple 1011. On notera que si le bloc courant est codé sur moins de M bits, la séquence SEB contient elle-même moins de M bits.

Dans un mode alternatif de réalisation, les M éléments binaires de la séquence SEB sont les M dernier bits lus lors du décodage du bloc courant.

Au cours d'une étape C4 on supprime du train binaire intermédiaire TB0 la séquence d'éléments binaires SEB déterminée et on ajoute les éléments binaires restants à un deuxième train binaire TB1, qu'on désignera dans la suite par première portion de flux. Autrement dit, le deuxième train binaire TB1 est donc constitué pour chaque bloc des éléments binaires du premier train binaire TB0 qui n'ont pas été supprimés de TB0 au cours de l'étape C4.

On notera que dans un mode alternatif de réalisation, il est possible de combiner cette étape avec la précédente : dans ce cas, on n'a pas recours à un train binaire intermédiaire TB0, mais on écrit directement dans la première portion de flux TB1 les éléments binaires représentatifs des données codées du bloc courant hormis les bits EB.

Au cours d'une étape C5, on vient tester si le bloc courant est le dernier bloc à traiter par le codeur, compte tenu de l'ordre de parcours défini précédemment. Si oui, l'étape suivante est l'étape de sélection du premier bloc. Si non, l'étape suivante est l'étape de codage E1 du nouveau bloc courant en éléments de syntaxe.

Au cours d'une étape C0 on vient sélectionner le bloc suivant B à traiter selon le procédé qui vient d'être décrit. Ce bloc devient le bloc courant à traiter, et l'étape suivante est l'étape de prédiction.

A ce stade, tous les blocs de l'image courante ont été traités une première fois et une partie des données codées pour le bloc courant a été insérée dans la première portion de flux TB1.

### 7.2.2 Formation d'une deuxième portion de flux de données codées

Au cours d'une deuxième phase du procédé d'encodage selon l'invention, on forme une deuxième portion de flux TB2 de la façon suivante :

Au cours de cette étape C0' on sélectionne comme bloc courant B le premier bloc à traiter. Dans le mode préféré de réalisation, il s'agit du premier bloc (dans l'ordre lexicographique).

Au cours d'une étape C1', on évalue les $2^N$ séquences de N éléments binaires possibles, ou hypothèses, pour remplacer la séquence d'éléments binaires EB qui a été supprimée du train binaire TB0 pour le bloc courant. L'objectif est de parcourir toutes les hypothèses et de reconstruire le bloc courant pour chacune d'elles. Par exemple, si EB contient 4 bits, on va tester 16 hypothèses.

En C11', on sélectionne une hypothèse, distincte de celles précédemment traitées, pour les bits EB associés au bloc courant. On suppose par exemple que les $2^N$ hypothèses sont rangées selon un ordre de valeur croissant du nombre formé par la séquence d'éléments binaires.

Dans le cas où N vaut 4, on a :

Hypothèse numéro 0, H(0)=0000

Hypothèse numéro 1, H(1)=0001

Hypothèse numéro 2, H(2)=0010

Hypothèse numéro 15, H(15)=1111

La première hypothèse testée est donc l'hypothèse H(0)=0000.

Au cours d'une sous-étape C12' on décode le bloc courant B' en utilisant les valeurs d'éléments binaires de l'hypothèse numéro H(i) la séquence EB.

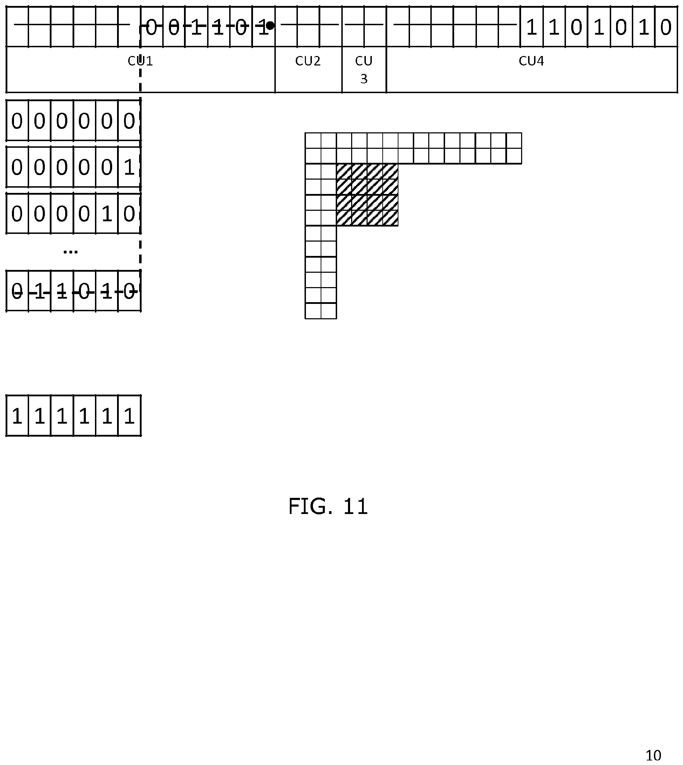

En relation avec les Figures **11, 12** et **13** on considère un exemple de réalisation selon lequel les éléments binaires EB ont été extraits à partir du premier élément binaire représentatif du bloc courant. On suppose que cette position est pointée par un premier pointeur de flux PF1. Elle correspond à une position de lecture d'éléments binaires du flux TB1.

L'opération de décodage consiste donc à décoder les éléments de syntaxe du bloc à partir d'au moins une partie des bits EB de l'hypothèse courante suivie (le cas échéant, car le décodage du bloc peut être terminé avant) des éléments binaires de la première portion de flux TB1 relatifs au bloc courant. Ce décodage produit une séquence d'éléments de description SED(i), où i est le numéro de l'hypothèse courante.

Dans l'exemple de la Figure **11,** la séquence d'éléments binaires H(i) est complètement lue ainsi que les éléments binaires de la première portion de flux associés au bloc courant, à compter de la position du pointeur PF1.

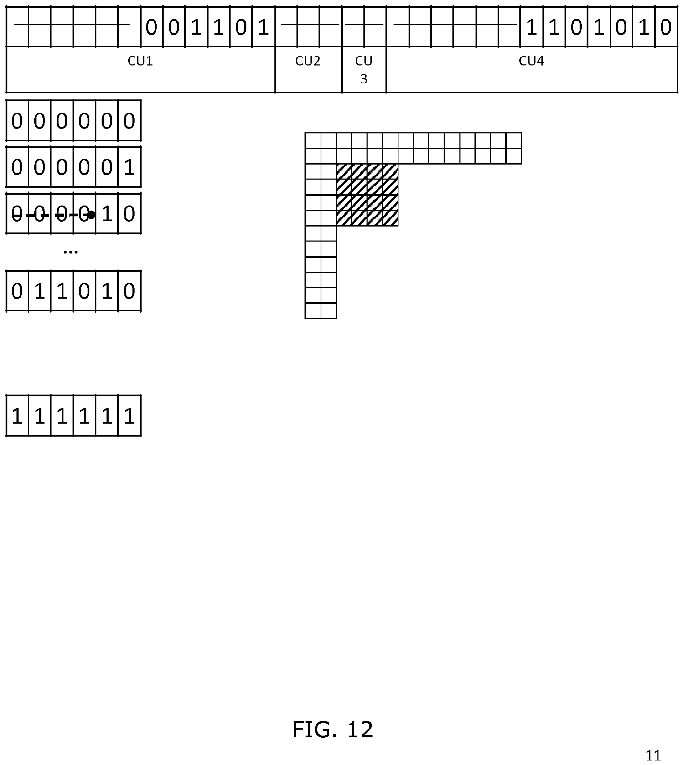

Dans l'exemple de la Figure **12,** la séquence d'éléments binaires H(i) n'est pas complètement lue, parce que le décodeur intégré au codeur a obtenu les valeurs des éléments de description dont il a besoin à l'aide des premiers bits de la séquence selon cette hypothèse et n'en a donc pas eu besoin. On peut donc supposer que l'hypothèse H(i) ne correspond pas à la séquence de bits extraite de TB0.

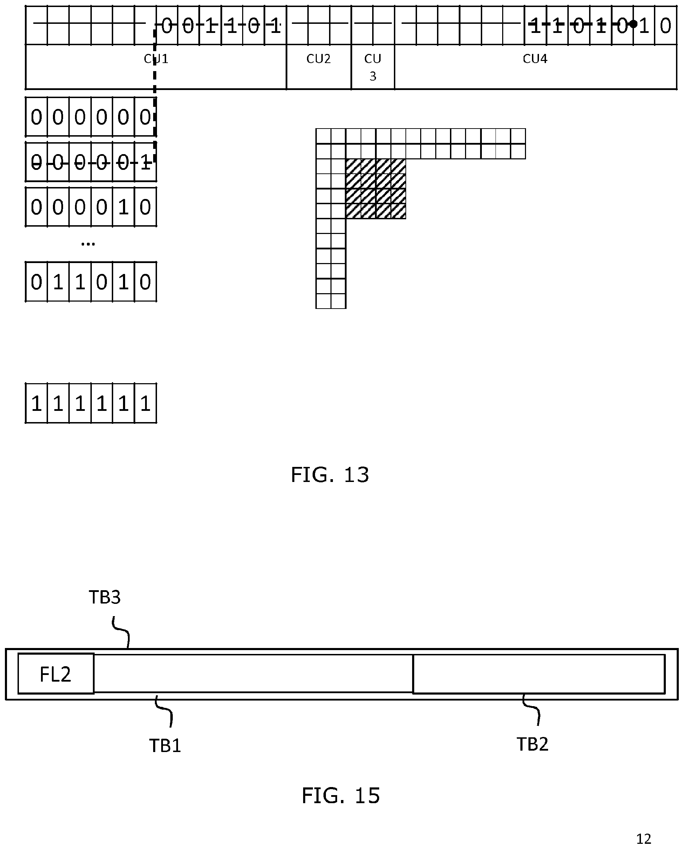

Dans l'exemple de la Figure **13,** la séquence d'éléments binaires EB(i) est complètement lue, ainsi que des éléments binaires de la première portion de flux situés au-delà de la limite des données codées du bloc courant. On peut donc supposer que l'hypothèse H(i) ne correspond pas à la séquence de bits extraite de TB0.

A l'issue de ce décodage, on dispose de la séquence d'éléments de description SED(i) pour l'hypothèse i.

Au cours d'une sous-étape C13' pour l'hypothèse H(i), on reconstruit une version décodée VB(i) du bloc courant. Elle est construite à partir des éléments de description SED(i) lus dans la première portion de flux et/ou dans la séquence qui correspond à l'hypothèse.

Au cours d'une sous-étape C14', on évalue un coût (respectivement une vraisemblance) associé à chaque version décodée du bloc courant VB(i).

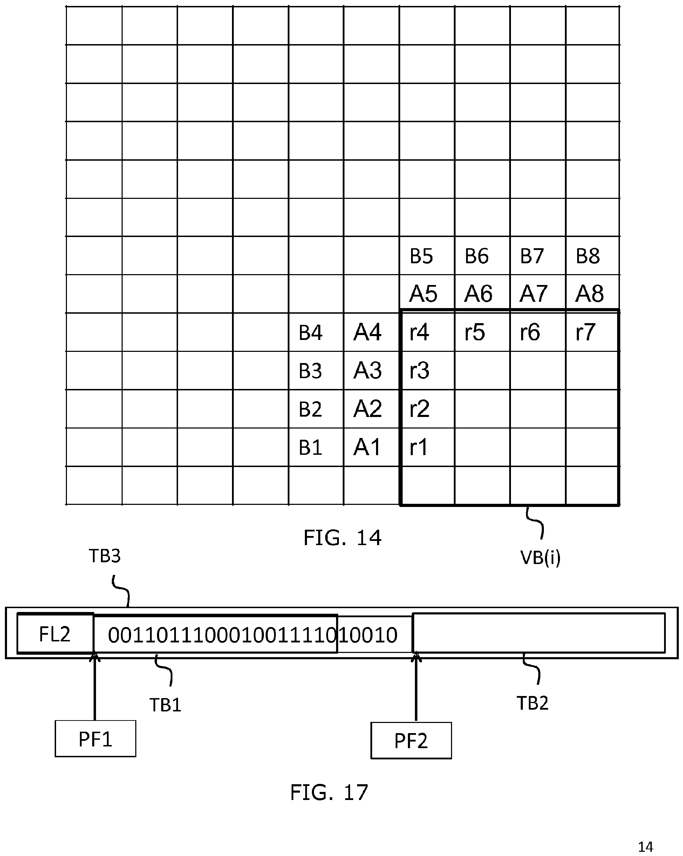

Par exemple, en relation avec la Figure **14,** cette évaluation consiste à extrapoler une série de valeurs {rj} de la façon suivante. Supposons que le bloc courant soit un bloc de taille 4x4 pixels. Les pixels situés immédiatement à gauche et au-dessus du bloc courant sont dénommés A1, A2,..., A8. Les pixels situés à gauche et au-dessus des pixels A1, A2,..., A8 sont dénommés B1, B2, ... ,B8. Les valeurs {rj} extrapolées sont calculées de la façon suivante :

$r1=2.A1-B1$

$r2=2.A2-B2$

$r3=2.A3-B3$

$r4=2.A4-B4$

$r5=2.A6-B6$

$r6=2.A7-B7$

$r7=2.A8-B8$

Ensuite, le coût CT(i) de l'hypothèse H(i) est calculé de la façon suivante :

$$CT(i) = |r1-X1| + |r2-X2| + |r3-X3| + |r4-X4| + |r5-X5| + |r6-X6| + |r7-X7|$$

Où X1, X2, X3, X4 sont les valeurs des pixels de la première colonne du bloc VB(i) et X4, X5, X6, X7 les valeurs de pixels de la première ligne de ce bloc.

On voit que cette mesure de coût est représentative d'une discontinuité le long des frontières du bloc.

Dans des modes alternatifs de réalisation, d'autres mesures de coût sont possibles. Par exemple, on peut choisir la somme des différences inter-pixels de tous les pixels internes au bloc. Ou encore, on peut calculer une énergie du résidu du bloc courant.

On en déduit une mesure de vraisemblance V(i) = -CT(i). Plus le coût de l'hypothèse H(i) est élevé, moins l'hypothèse est vraisemblable.

Au cours d'une sous-étape de test (non représentée) on va vérifier si l'hypothèse courante H(i) est la dernière hypothèse à tester sur les bits EB. Dans le mode préféré de réalisation où nous testons les valeurs binaires dans l'ordre croissant classique, ce test consiste à vérifier si la valeur ne contient que des 1.

Si l'hypothèse courante n'est pas la dernière, on retourne à l'étape C13' pour tester l'hypothèse suivante.

Si l'hypothèse courante est la dernière, on classe les hypothèses selon un ordre décroissant de vraisemblance.

En C4', on détermine une information caractéristique IC(i) de la séquence SEB.

Dans un premier mode de réalisation de l'invention, on trie les séquences testées selon un ordre de mesure de vraisemblance décroissante et on détermine au cours d'une étape C42' la valeur d'une information caractéristique IC de la séquence d'éléments binaires EB qui correspond à un rang de l'hypothèse correcte H(i) (soit la valeur H(4) = 1011 dans notre exemple) dans un tableau qui contient toutes les hypothèses classées par coût croissant ou par mesure de vraisemblance décroissante. Ainsi, on peut trouver que l'hypothèse 1011 est la 4ème parmi les 16 combinaisons classées par coût croissant. On va alors affecter la valeur 4 à l'information caractéristique IC de la séquence SEB associée au bloc courant.

Bien sûr, on peut utiliser d'autres types d'informations caractéristiques. Ainsi, selon une variante, on identifie la séquence S(i) qui correspond à l'hypothèse H(i) la plus vraisemblable, c'est-à-dire celle dont le coût est le plus faible. Ensuite, on compare bit à bit les séquences EB et S (i) en E92', et on construit une information caractéristique IC = BDIFF représentative de l'égalité ou de l'inégalité entre les bits. Par exemple, on peut commencer par comparer les valeurs du bit de poids le plus fort de EB et SEB(i), et transmettre BDIFF=0 si ils sont différents et BDIFF=1 si ils sont égaux. Ensuite, on applique le même procédé au deuxième bit de poids fort, et on répète le procédé jusqu'au bit de poids faible. On constate que le plus souvent, les bits sont égaux. BDIFF prend donc plus souvent la valeur 1 que 0.

Au cours d'une étape C5', on code la valeur de l'information caractéristique IC déterminée à l'aide d'un codeur entropique paramétré par le paramètre p.

On évalue en C2' une mesure de disparité DV des valeurs de vraisemblance obtenues pour la pluralité d'hypothèses évaluées.

On calcule par exemple la disparité DV à partir de la variance des coûts CT(i).

En effet, on constate que si tous les coûts CT(i) sont proches les uns des autres (variance faible), il va être difficile de distinguer la bonne combinaison des autres. En revanche, si les coûts sont très différents les uns des autres (variance forte), il va être plus facile d'identifier cette combinaison.

En conséquence, l'information complémentaire, qui est la valeur transmise par le codeur au décodeur, n'aura pas la même probabilité d'être faible : si la variance est faible, le rang a moins de chance d'être petit que lorsque la variance est forte. Or il est essentiel, pour compresser au mieux ce rang, de connaitre exactement sa probabilité d'être faible.

En C3', on détermine au moins un paramètre p de codage en fonction de la disparité DV évaluée. Dans cet exemple, au lieu d'utiliser un seul codeur entropique pour coder le rang, nous allons utiliser, par exemple, 10 codeurs entropiques différents, prédéterminés en fonction de la variance des coûts CT(i). On définit ainsi 10 groupes de valeurs de cette variance, on identifie un groupe en fonction de la valeur de variance obtenue pour le bloc courant :
Par exemple :

- Si $0 \leq V < 10$, le bloc courant appartient au groupe 1,
- Si $10 \leq V < 20$, le bloc courant appartient au groupe 2,
- Si $20 \leq V < 40$, le bloc courant appartient au groupe 3,
- Si $40 \leq V < 80$, le bloc courant appartient au groupe 4,
- Si $80 \leq V < 160$, le bloc courant appartient au groupe 5,
- Si $160 \leq V < 320$, le bloc courant appartient au groupe 6,
- Si $320 \leq V < 640$, le bloc courant appartient au groupe 7,
- Si $640 \leq V < 1280$, le bloc courant appartient au groupe 8,
- Si $1280 \leq V < 2560$, le bloc courant appartient au groupe 9,

- Si 2560≤V, le bloc courant appartient au groupe 10,

En fonction du groupe, un codeur différent est déterminé pour coder le rang. Le paramètre p comprend donc un identifiant du codeur associé au groupe.

Par exemple, si le codeur entropique utilisé est du type codage de Huffmann, alors une table de code spécifique (associant un code de Huffman à chaque valeur de rang possible) est associée à chaque groupe. De même si le codeur entropique est du type CABAC, alors un contexte CABAC différent sera utilisé pour chaque groupe. On insère ensuite la valeur codée dans la deuxième portion de flux TB2.

En ce qui concerne le mode de réalisation IC= DS, le coût associé à la combinaison correcte tend à être faible, donc la valeur de DS est souvent petite. On a donc une répartition statistique non uniforme des occurrences de DS sur l'ensemble des valeurs possibles, ce qui permet de réduire le débit, en utilisant un codeur entropique classique (codage de Huffman, codage arithmétique), adapté à la statistique de DS.

En ce qui concerne le mode de réalisation IC = BDIFF, la séquence la plus vraisemblable est généralement proche de la séquence correcte ce qui fait que la différence bit à bit a une valeur qui est souvent petite. La répartition statistique des occurrences est dans ce cas aussi non uniforme ce qui permet au codeur entropique de réaliser une compression efficace.

Au cours d'une étape C6', on vient tester si le bloc courant est le dernier bloc à traiter, compte tenu de l'ordre de parcours défini précédemment. Si oui, l'étape suivante est l'étape C7' de concaténation des première et deuxième portions de flux TB1 et TB2. Si non, l'étape suivante est l'étape C0' de sélection du bloc suivant.

7.2.3 Concaténation des trains binaires

Au cours de cette étape C7' on va concaténer la première et la deuxième portions de flux TB1 et TB2 pour constituer le train binaire final TB3 qui peut être ensuite stocké ou transmis au décodeur. La concaténation peut se faire par juxtaposition comme illustré par la Figure **13,** ou par multiplexage des bits des flux TB1 et TB2, ou par toute autre façon de combiner les deux flux, pourvu qu'elle permette au décodeur de les distinguer.

Cette étape peut comprendre en outre une insertion dans le flux final TB3 d'une information permettant d'identifier la localisation de la deuxième portion de flux TB2. Par exemple, si les flux TB1 et TB2 sont juxtaposés dans cet ordre, une information sera insérée avant le début du premier flux TB1 afin d'indiquer où se trouve le début du flux TB2 dans le flux de données final TB3. Il s'agit par exemple d'un flag FL2 qui comprend une adresse correspondant au début de la deuxième portion TB2.

7.3 Description d'un mode de réalisation d'un procédé de décodage selon l'invention

Dans la suite, on considère un décodeur ayant reçu le train binaire TB3 produit par le procédé de codage selon l'invention et on décrit un procédé de décodage selon l'invention en relation avec la Figure **15.**

7.3.1 Identification de la première et de la deuxième portion TB1, TB2 dans le train binaire TB3

Au cours de cette étape D00, on va identifier la première portion de flux TB1 comprenant au moins une partie des données codées des blocs de l'image et une deuxième portion de flux TB2 comprenant les informations IC caractéristiques des séquences d'éléments binaires manquantes dans la première portion de flux.

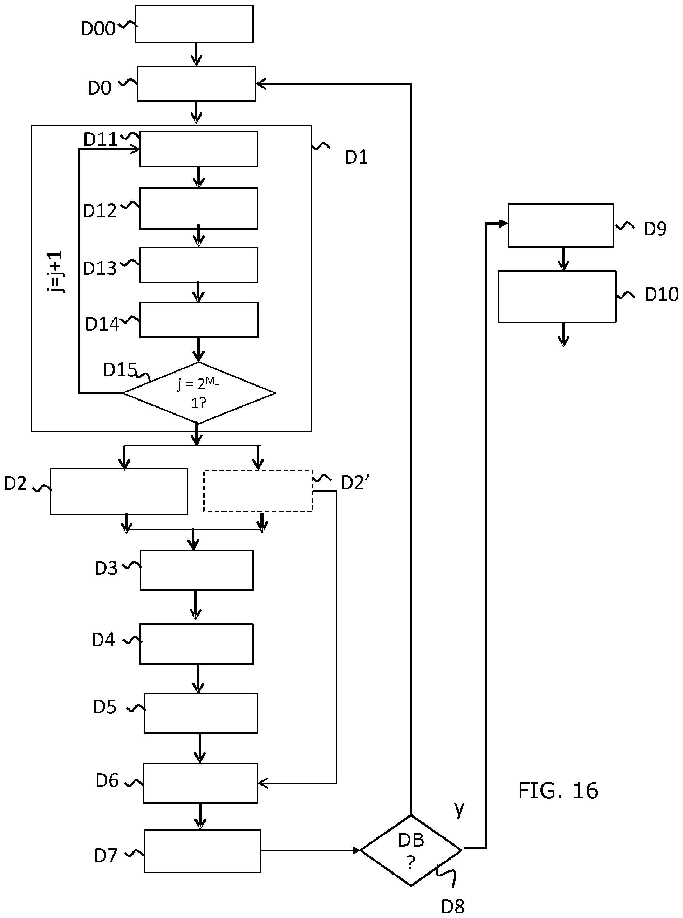

En relation avec la Figure **16,** on suppose que la première et la deuxième portion de flux sont juxtaposées, avec TB1 suivi par TB2 et on lit dans le flux TB3 une information FL2 représentative d'une position de début de la deuxième portion de flux TB2 dans le flux complet TB3. Ainsi, techniquement, le décodeur a recours de façon classique à un premier pointeur de fichier PF1 dont la position est initialisée au début du flux TB3 et qui se déplace dans la première portion de flux au fur et à mesure de l'avancement du décodage et, selon l'invention, un deuxième pointeur de fichier PF2, dont la position est initialisée au niveau de l'adresse indiquée par le flag FL2 et qui se déplace dans la deuxième portion de flux au fur et à mesure de l'avancement du décodage.

Au cours d'une étape D0 on sélectionne le bloc courant C' à décoder.

7.3.2 Traitement des données de la première portion de flux pour le bloc courant

Il s'agit de retrouver la séquence d'éléments binaires SEB supprimée du train binaire par le codeur. On considère qu'elle comprend M éléments binaires, avec M entier non nul.

Au cours de cette étape D1, on évalue les $2^M$ séquences de M éléments binaires ou hypothèses H(j) possibles avec j entier compris entre 1 et $2^M$-1. L'objectif est de parcourir toutes les hypothèses. Par exemple, si le sous ensemble EB contient M=4 bits, on va tester 16 hypothèses.

Par exemple, on parcourt les hypothèses selon un ordre prédéterminé comme déjà décrit pour le procédé de codage selon le deuxième mode de réalisation l'invention et on réalise les sous-étapes suivantes :
Au cours d'une étape D11, on obtient une hypothèse H(j).

On obtient une hypothèse, parmi les hypothèses non encore traitées.

En D12, on décode les éléments de description correspondant à l'hypothèse courante H(j).

On suppose dans la suite que la séquence de M éléments binaires EB a été extraite par l'encodeur au début des données codées du bloc courant B. Le décodeur reproduit le fonctionnement de l'encodeur et commence par décoder les éléments binaires de la séquence de l'hypothèse courante H(j) pour déterminer les valeurs des éléments de description SED(j) dont il a besoin pour décoder le bloc courant.

Plusieurs cas de figure peuvent se présenter :

- Le décodeur n'a pas décodé tous les éléments de syntaxe dont il a besoin à partir des N éléments binaires de la séquence H(j). Il continue son décodage en lisant les données de la première portion de flux TB1 à partir de la position courante du pointeur PF1 qu'il déplace au fur et à mesure de sa lecture,

- le décodeur a décodé tous les éléments de syntaxe dont il a besoin pour le bloc courant à partir des N éléments binaires de la séquence H(i). Dans ce cas, il ne déplace par le pointeur PF1 et ne lit pas d'information dans la première portion de flux TB1;

- le décodeur a décodé tous les éléments de description dont il a besoin à partir des M<N premiers éléments binaires de la séquence H(i). Il ne garde que ceux-là et si la séquence H(i) s'avère être l'hypothèse correcte, il n'insère que ceux-là dans la première portion de flux TB1.

On notera que cette étape comprend généralement une sous-étape de décodage entropique DE des éléments binaires lus dans l'hypothèse H(j) ou dans la première portion de flux TB1.

Au cours d'une sous-étape D13, pour l'hypothèse H(j), on reconstruit une version décodée VB(j) du bloc courant. Elle est construite à partir des éléments de description SES(j) déterminés en D12. Par exemple, dans un schéma de décodage type HEVC, les éléments de description déterminés permettent d'obtenir un résidu du bloc courant qu'on ajoute à une prédiction de ce bloc réalisée à partir des blocs voisins déjà décodés et reconstruits.

De façon similaire à celle décrite pour le procédé de codage, on calcule au cours d'une sous-étape D14 une mesure de vraisemblance V(j) associée à l'hypothèse courante H(j). Dans un mode de réalisation, cette mesure est choisie égale à l'opposé d'un coût représentatif d'une discontinuité aux frontières du bloc courant avec des blocs voisins déjà traités et reconstruits.

En D15, on teste s'il reste des hypothèses à évaluer.

Une fois toutes les hypothèses traitées, on dispose pour chacune d'elles des éléments de description associés au bloc courant et d'une mesure de vraisemblance.

En D2, de façon analogue à celle décrite pour le codeur, on trie en D2 les hypothèses de la plus vraisemblable à la moins vraisemblable. On forme ainsi une liste ordonnée selon un ordre correspondant à une mesure de vraisemblance décroissante.

Selon une variante, correspondant à celle décrite pour le codeur, on détermine en D2' l'hypothèse la plus vraisemblable, c'est-à-dire celle qui maximise la mesure de vraisemblance évaluée.

En D3, on calcule une disparité des mesures de vraisemblance obtenues. En D4, on détermine au moins un paramètre Pa d'un décodeur en fonction de la disparité DV calculée.

Au cours d'une étape D5, on lit dans la deuxième portion de flux TB2 une information complémentaire IC représentative de la séquence SEB à décoder. En relation avec la Figure **16,** le décodeur commence sa lecture à partir de la position courante du pointeur PF2 de deuxième portion de flux. Il effectue donc en D5 un décodage entropique classique DE, par exemple de type CABAC, à l'aide du décodeur paramétré à l'aide du paramètre Pa pour décoder la valeur de l'information IC caractéristique de la séquence extraite par l'encodeur.

Selon une première option, l'information IC est un rang DS.

Selon une deuxième option, l'information IC est une différence bit à bit avec la séquence la plus vraisemblable déterminée.

Au cours d'une sous-étape D6, on identifie l'hypothèse correcte H(j0) pour les bits EB à partir de l'information caractéristique IC décodée. Selon la première option, elle correspond, dans la liste ordonnée d'hypothèses, à celle qui a le rang DS. Selon la deuxième option, elle correspond à l'hypothèse H(j0) dont la séquence d'éléments binaires a une différence bit à bit avec la séquence la plus vraisemblable qui est égale à IC.

Au cours d'une étape D7, au moins une partie des bits EB déterminés est insérée dans la première portion de flux TB1 à l'endroit où ils ont été supprimés par l'encodeur.

On notera que si, lors de la détermination des éléments de description SED(j), le décodeur n'a pas eu besoin de lire tous les éléments binaires de la séquence H(j0) pour décoder les éléments de syntaxe du bloc courant, alors, pour compléter la première portion de flux TB1, il ne retient que les éléments binaires de l'hypothèse correcte H(j0) qu'il a réellement utilisés. Autrement dit la séquence d'éléments binaires déterminée comme l'hypothèse correcte comprend un nombre d'éléments inférieur au nombre N prédéterminé, ce qui correspond à l'exemple déjà décrit de la

Figure 12.

Dans ce mode de réalisation, un nouveau flux de données codées complet TB1' est reconstruit à partir de la première portion de flux TB1 reçue et des séquences d'éléments binaires associées à chaque bloc.

On notera que cette étape D7 de reconstruction d'un train binaire TB1' complet est optionnelle, dans la mesure où les éléments de description associés au bloc courant ont déjà été décodés et les pixels du bloc courant déjà reconstruits.

On peut simplement les stocker dans une mémoire MEM2 de façon à pouvoir afficher l'image courante reconstruite.

Néanmoins, on notera qu'il existe des décodeurs entropiques à états finis. Ces décodeurs comportent des variables internes. Lors du décodage d'une partie d'un flux binaire, la valeur décodée dépend de la valeur des variables internes, et les variables internes sont mises à jour et donc éventuellement modifiées. Un exemple de décodage entropique à états finis est le décodeur CABAC utilisé dans le standard HEVC. Lorsqu'on a recours à un décodeur entropique à états finis, il faut veiller à ce que le décodeur entropique retrouve l'état qu'il avait atteint lors du décodage du bloc courant avant de commencer celui du bloc suivant. Pour ce faire, deux options peuvent être envisagées :

- soit reformer le flux TB1 complet comme précédemment décrit afin de permettre au décodeur entropique de refaire le décodage complet des éléments binaires correspondant à chaque bloc et cette manière retrouver l'état qu'il avait atteint pour l'hypothèse correcte ;

- soit mémoriser, en plus des éléments de description, ou des pixels décodés pour le bloc courant, l'état du décodeur entropique correspondant à chaque hypothèse, de façon à ce que le décodeur entropique se repositionne sur l'état correspondant à l'hypothèse correcte avant de commencer le décodage du bloc suivant.

Au cours d'une étape D8, on vient tester si le bloc courant est le dernier bloc à traiter par l'unité de décodage. Si oui, le codeur a terminé son traitement. Si non, l'étape suivante est l'étape de sélection du bloc suivant D0.

Ce bloc devient le bloc courant à traiter, et l'étape suivante est l'étape D1 d'évaluation des hypothèses.

A l'issue de ces étapes, tous les blocs ont été traités et la portion de flux TB1' ainsi reconstruite correspond au flux de données intermédiaire TB0 décrit dans le mode de réalisation du procédé de codage.

Dans le cas où l'étape D5 de reconstruction d'un flux complété TB1' n'est pas mise en œuvre, on positionne le décodeur entropique sur l'état ET associé à l'hypothèse correcte $H(j_0)$ pour le bloc qui vient d'être traité.

Au cours d'une étape D9, on vient décoder le train binaire TB1' complété par des moyens classiques, tel qu'un décodage selon la norme HEVC. Cette étape est optionnelle. Elle ne concerne que le cas où l'étape de reconstruction D7 a été mise en œuvre. En D10, on reconstruit le bloc courant.

Le train binaire TB est destiné à être présenté en entrée d'un décodeur, local ou distant. Par exemple, un signal portant le train binaire est transmis au décodeur par l'intermédiaire d'un réseau de communication.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

En relation avec la figure 17, on présente maintenant un exemple de structure simplifiée d'un dispositif 100 de codage d'une image numérique selon l'invention. Le dispositif 100 met en œuvre le procédé de codage selon l'invention qui vient d'être décrit dans ses différents modes de réalisation.

Par exemple, le dispositif 100 comprend une unité de traitement 110, équipée d'un processeur $\mu 1$, et pilotée par un programme d'ordinateur Pg1 120, stocké dans une mémoire 130 et mettant en œuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.

Dans cet exemple de réalisation de l'invention, le dispositif 100 comprend une machine de calcul dédiée à ou configurée pour :

- Evaluer (EVAL) une pluralité d'hypothèses de valeurs d'au moins un élément de description du bloc courant par calcul d'une mesure de vraisemblance par hypothèse;

- Calculer (CALC DV) une disparité des mesures de vraisemblance obtenues ;
- Déterminer (DET Pa) au moins un paramètre d'un codeur en fonction de la disparité calculée ;
- Déterminer (DET IC) une information représentative d'une relation entre la valeur du au moins un élément de description pour le bloc courant et au moins une hypothèse de la pluralité d'hypothèse ;
- Coder (COD IC) l'information déterminée à l'aide du codeur paramétré; et
- Insérer (INSER) l'information codée dans le flux.

Avantageusement, selon le premier mode de réalisation de l'invention, le dispositif 100 est configuré pour prédire le au moins un élément de description par sélection de l'hypothèse de valeur associée à la mesure de vraisemblance la plus élevée, dite valeur prédite, pour déterminer l'information comme une différence entre la valeur prédite et la valeur de l'élément de description, dite valeur résidu, et pour reconstruire le bloc par correction de la valeur prédite à l'aide de la valeur résidu.

Selon le deuxième mode de réalisation, le dispositif 100 est configuré pour classer les hypothèses selon un ordre de vraisemblance décroissante et pour déterminer l'information à coder comme un rang dans le classement.

Le dispositif 100 comprend en outre une unité BD1 de stockage des mesures de vraisemblance obtenues, des disparités calculées et des paramètres de codage déterminés.

Ces unités sont pilotées par le processeur $\mu 1$ de l'unité de traitement 110.

En relation avec la figure **17,** on présente maintenant un exemple de structure simplifiée d'un dispositif 200 de décodage d'une image numérique selon l'invention. Le dispositif 200 met en œuvre le procédé de décodage selon l'invention qui vient d'être décrit dans ses différents modes de réalisation.

Par exemple, le dispositif 200 comprend une unité de traitement 210, équipée d'un processeur $\mu 2$, et pilotée par un programme d'ordinateur Pg2 220, stocké dans une mémoire 230 et mettant en œuvre le procédé de selon l'invention.

A l'initialisation, les instructions de code du programme d'ordinateur $Pg_1$ 220 sont par exemple chargées dans une mémoire RAM avant d'être exécutées par le processeur de l'unité de traitement 210. Le processeur de l'unité de traitement 210 met en œuvre les étapes du procédé décrit précédemment, selon les instructions du programme d'ordinateur 220.

Dans cet exemple de réalisation de l'invention, le dispositif 200 comprend une machine de calcul dédiée à ou configurée pour :

- Evaluer (EVAL) une pluralité d'hypothèses de valeurs d'au moins un élément de description du bloc courant par calcul d'une mesure de vraisemblance par hypothèse;
- Calculer (CALC DV) une disparité des mesures de vraisemblance obtenues ;
- Déterminer (DET p) au moins un paramètre d'un codeur en fonction de la disparité calculée ;
- Décoder (DEC IC) une information complémentaire d'identification d'au moins une desdites hypothèses ;
- Obtenir la valeur du au moins un élément de description pour le bloc courant à partir de la au moins une hypothèse identifiée.

Avantageusement, selon le premier mode de réalisation de l'invention, le dispositif 100 est configuré pour prédire le au moins un élément de description par sélection de l'hypothèse de valeur associée à la mesure de vraisemblance la plus élevée, dite valeur prédite, pour déterminer l'information comme une différence entre la valeur prédite et la valeur de l'élément de description, dite valeur résidu, et pour reconstruire le bloc par correction de la valeur prédite à l'aide de la valeur résidu.

Selon le deuxième mode de réalisation, le dispositif 200 est configuré pour classer les hypothèses selon un ordre de vraisemblance décroissante, pour interpréter l'information décodée comme un rang dans le classement, pour identifier l'hypothèse associée audit rang et pour déterminer la valeur du au moins un élément de description comme celle de l'hypothèse identifiée.

Le dispositif 200 comprend en outre une unité BD2 de stockage des mesures de vraisemblance obtenues, des disparités calculées et des paramètres de décodage déterminés.

Ces unités sont pilotées par le processeur $\mu 2$ de l'unité de traitement 210.

De façon avantageuse, les dispositifs 100 et 200 peuvent être intégré à un terminal d'utilisateur TU. Ils sont alors agencés pour coopérer au moins avec les modules suivants du terminal TU :

- un module E/R d'émission/réception de données, par l'intermédiaire duquel le train binaire TB ou le fichier compressé FC est transmis dans un réseau de télécommunications, par exemple un réseau filaire ou un réseau hertzien, respectivement reçu ;

- un module d'affichage DISP des images décodées.

Grâce à ses bonnes performances, et notamment un gain en compression de l'ordre de 1 %, l'invention qui vient d'être décrite dans ses différents modes de réalisation s'applique à tout schéma de compression vidéo par bloc. En particulier, les procédés de codage et de décodage décrits précédemment peuvent être intégrés dans des codeurs/décodeurs vidéo standards tels que H.266, HEVC/H.265, AVC/H.264 ou d'une future norme Post-HEVC, ou encore dans tout type de codeurs/décodeurs vidéo propriétaires. Les procédés de codage et de décodage selon l'invention s'appliquent également à tous types de codeurs/décodeurs d'images fixes.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de décodage d'un flux de données codées représentatif d'au moins une image ($I_m$), ladite image étant découpée en blocs, **caractérisé en ce que** le procédé de décodage comprend, pour un bloc courant, les étapes suivantes :

   - Evaluation (D3) d'une pluralité d'hypothèses de valeurs d'au moins un élément de description du bloc courant, par calcul d'une mesure de vraisemblance (V) par hypothèse, ledit calcul étant le même que celui utilisé pour coder le flux de données;
   - Calcul (D4) d'une disparité (DV) des mesures de vraisemblance obtenues;
   - Détermination (D5) d'au moins un paramètre (p) d'un décodeur entropique en fonction de la disparité calculée (DV), ledit au moins un paramètre appartenant à un groupe comprenant au moins :

     - un paramètre comprenant un contexte associé à un décodeur arithmétique binaire adaptatif ;
     - un paramètre comprenant une probabilité associée à une information complémentaired'identification d'au moins une desdites hypothèses ;
     - un paramètre comprenant un identifiant d'un décodeur prédéterminé ;

   - Décodage (D6) à l'aide d'un décodeur entropique paramétré par ledit au moins un paramètre, de l'information complémentaire d'identification (IC) d'au moins une desdites hypothèses ; et
   - Identification (D7) d'au moins une des hypothèses à l'aide d'au moins l'information complémentaire décodée et obtention de la valeur du au moins un élément de description pour le bloc courant, à partir de la au moins une hypothèse identifiée.

2. Procédé de codage d'un flux de données représentatif d'au moins une image ($I_m$), ladite image étant découpée en blocs, **caractérisé en ce qu'**il comprend les étapes suivantes, mises en oeuvre pour un bloc courant:

   - Evaluation (E3) d'une pluralité d'hypothèses de valeurs d'au moins un élément de description du bloc courant, par calcul d'une mesure de vraisemblance (V) par hypothèse;
   - Calcul (E4) d'une disparité (DV) des mesures de vraisemblance obtenues ;
   - Détermination (E5) d'au moins un paramètre (p) d'un codeur entropique en fonction de la disparité (DV) calculée, ledit au moins un paramètre appartenant à un groupe comprenant au moins :

     - un paramètre comprenant un contexte associé à un codeur arithmétique binaire adaptatif ;
     - un paramètre comprenant une probabilité associée à une information complémentaire d'identification d'au moins une desdites hypothèses ;
     - un paramètre comprenant un identifiant d'un codeur prédéterminé ;

   - Codage (E7) de ladite information complémentaire à l'aide d'un codeur entropique paramétré par ledit au moins un paramètre; et
   - Insertion (E9) de l'information codée dans le flux.

3. Procédé selon l'une des revendications **1** ou **2, caractérisé en ce qu'**il comprend une étape de classement (C2', D2) des hypothèses selon un ordre de vraisemblance décroissante, **en ce que** l'information complémentaire (IC) comprend un rang dans le classement et **en ce que** la valeur du au moins un élément de description correspond à l'hypothèse classée audit rang.

**4.** Procédé selon l'une des revendications **1 à 2, caractérisé en ce qu'**il comprend en outre une étape de prédiction (E4, E34', D5, D53') de la valeur du au moins un élément de description par sélection de l'hypothèse de valeur associée à la mesure de vraisemblance la plus élevée, dite valeur prédite et **en ce que** l'information complémentaire comprend une différence entre la valeur prédite et la valeur de l'élément de description, dite valeur résidu.

**5.** Procédé selon la revendication **3, caractérisé en ce qu'**il évalue (D5') une pluralité d'hypothèses d'une séquence d'au moins deux éléments de description, **en ce que** pour le premier élément de la séquence, il calcule une disparité des mesures de vraisemblance obtenues pour la pluralité d'hypothèses de la séquence et **en ce que** la valeur du premier élément de description de la séquence correspond à celle de l'hypothèse identifiée.

**6.** Dispositif (200) de décodage d'un flux de données codées représentatif d'au moins une image ($I_m$), ladite image étant découpée en blocs, **caractérisé en ce qu'**il comprend une machine de calcul configurée pour ou dédiée à : pour le bloc courant :

- Evaluer (EVAL) une pluralité d'hypothèses de valeurs d'au moins un élément de description du bloc courant, par calcul d'une mesure de vraisemblance (V) par hypothèse;
- Calculer (CALC DV) une disparité des mesures de vraisemblance obtenues;
- Déterminer (DET p) au moins un paramètre d'un décodeur entropique en fonction de la disparité calculée, ledit au moins un paramètre appartenant à un groupe comprenant au moins :

  - un paramètre comprenant un contexte associé à un décodeur arithmétique binaire adaptatif ;
  - un paramètre comprenant une probabilité associée à une information complémentaire d'au moins une desdites hypothèses ;
  - un paramètre comprenant un identifiant d'un décodeur prédéterminé ;

- Décoder (DEC IC) à l'aide d'un décodeur entropique paramétré par ledit au moins un paramètre l'information complémentaire d'identification d'au moins une desdites hypothèses ;
- Identifier au moins une des hypothèses à l'aide d'au moins l'information complémentaire décodée et obtenir (DER ED) la valeur du au moins un élément de description pour le bloc courant, à partir de la au moins une hypothèse identifiée.

**7.** Dispositif (100) de codage d'un flux de données représentatif d'au moins une image ($I_m$), ladite image étant découpée en blocs, **caractérisé en ce qu'**il comprend une machine de calcul configurée pour ou dédiée à : pour le bloc courant :

- Evaluer (EVAL) une pluralité d'hypothèses de valeurs d'au moins un élément de description du bloc courant, par calcul d'une mesure de vraisemblance (V) par hypothèse;
- Calculer (CALC DV) une disparité des mesures de vraisemblance obtenues ;
- Déterminer (DET p) au moins un paramètre d'un codeur entropique en fonction de la disparité calculée, ledit au moins un paramètre appartenant à un groupe comprenant au moins :

  - un paramètre comprenant un contexte associé à un codeur arithmétique binaire adaptatif ;
  - un paramètre comprenant une probabilité associée à une information complémentaire d'identification d'au moins une desdites hypothèses;
  - un paramètre comprenant un identifiant d'un codeur prédéterminé;

- Coder (COD IC) à l'aide d'un codeur entropique paramétré par ledit au moins un paramètre l'information complémentaire d'identification d'au moins une desdites hypothèses; et
- Insérer (INSERT) l'information codée dans le flux.

**8.** Equipement terminal d'utilisateur (TU, TU') **caractérisé en ce qu'il** comprend un dispositif de décodage (200) d'au moins une image numérique selon la revendication **6** et/ou un dispositif de codage (100) d'au moins une image numérique selon la revendication **7.**

**9.** Programme d'ordinateur (Pg1, Pg2) comprenant des instructions pour la mise en œuvre du procédé de selon l'une des revendications **1 à 5,** lorsqu'il est exécuté par un processeur.

**10.** Support d'enregistrement lisible par un ordinateur, sur lequel est enregistré un programme d'ordinateur comprenant des instructions de code de programme pour l'exécution des étapes du procédé selon l'une des revendications **1** à **5**.

**Patentansprüche**

1. Verfahren zur Dekodierung eines wenigstens ein Bild ($I_m$) darstellenden Flusses kodierter Daten, wobei das Bild in Blöcke aufgeteilt ist, **dadurch gekennzeichnet, daß** das Dekodierungsverfahren für einen laufenden Block die folgenden Schritte aufweist:

   - Bewerten (D3) einer Anzahl Wertehypothesen wenigstens eines Beschreibungselements des laufenden Blocks durch Berechnen eines Wahrscheinlichkeitsmaßes (V) je Hypothese, wobei die Berechnung die gleiche wie die für die Kodierung des Datenflusses ist,
   - Berechnen (D4) eines Unterschieds (DV) zwischen den erhaltenen Wahrscheinlichkeitsmaßen,
   - Bestimmen (D5) wenigstens eines Parameters (p) eines Entropiedekodierers in Abhängigkeit vom berechneten Unterschied (DV), wobei der wenigstens eine Parameter zu einer Gruppe gehört, die mindestens

      - einen Parameter, der einen einem adaptiven binären arithmetischen Dekodierer zugeordneten Zusammenhang aufweist,
      - einen Parameter, der eine einer komplementären Identifizierungsinformation wenigstens einer der Hypothesen zugeordnete Wahrscheinlichkeit aufweist,
      - einen Parameter mit einer Kennung eines vorbestimmten Dekodierers aufweist,

   - Dekodieren (D6) der komplementären Identifizierungsinformation (IC) wenigstens einer der Hypothesen mit Hilfe eines Entropiedekodierers, der durch den wenigstens einen Parameter parametriert ist, und
   - Identifizieren (D7) wenigstens einer der Hypothesen mit Hilfe wenigstens der dekodierten komplementären Information und, von der wenigstens einen identifizierten Hypothese ausgehend, Erhalten des Werts des wenigstens einen Beschreibungselements für den laufenden Block.

2. Verfahren zur Kodierung eines wenigstens ein Bild ($I_m$) darstellenden Datenflusses, wobei das Bild in Blöcke aufgeteilt ist, **dadurch gekennzeichnet, daß** es die für einen laufenden Block ausgeführten folgenden Schritte aufweist:

   - Bewerten (E3) einer Anzahl Wertehypothesen wenigstens eines Beschreibungselements des laufenden Blocks durch Berechnen eines Wahrscheinlichkeitsmaßes (V) je Hypothese,
   - Berechnen (E4) eines Unterschieds (DV) zwischen den erhaltenen Wahrscheinlichkeitsmaßen,
   - Bestimmen (E5) wenigstens eines Parameters (p) eines Entropiekodierers in Abhängigkeit vom berechneten Unterschied (DV), wobei der wenigstens eine Parameter zu einer Gruppe gehört, die mindestens

      - einen Parameter, der einen einem adaptiven binären arithmetischen Kodierer zugeordneten Zusammenhang aufweist,
      - einen Parameter, der eine einer komplementären Identifizierungsinformation wenigstens einer der Hypothesen zugeordnete Wahrscheinlichkeit aufweist,
      - einen Parameter mit einer Kennung eines vorbestimmten Kodierers aufweist,

   - Kodieren (E7) der komplementären Information mit Hilfe eines Entropiekodierers, der durch den wenigstens einen Parameter parametriert ist, und
   - Einfügen (E9) der kodierten Information in den Fluß.

3. Verfahren gemäß einem der Ansprüche 1 oder 2, **dadurch gekennzeichnet, daß** es einen Schritt des Klassifizierens (C2', D2) der Hypothesen gemäß einer absteigenden Wahrscheinlichkeitsreihenfolge aufweist, daß die komplementäre Information (IC) einen Rang in der Klassifizierung aufweist und daß der Wert des wenigstens einen Beschreibungselements der auf den Rang klassifizierten Hypothese entspricht.

4. Verfahren gemäß einem der Ansprüche 1 bis 2, **dadurch gekennzeichnet, daß** es außerdem einen Schritt (E4, E34', D5, D53') der Vorhersage des Werts des wenigstens einen Beschreibungselements durch Auswahl der dem als vorhergesagten Wert bezeichneten höchsten Wahrscheinlichkeitsmaß zugeordneten Werthypothese aufweist und daß die komplementäre Information eine als Restwert bezeichnete Differenz zwischen dem vorhergesagten Wert und dem Wert des Beschreibungselements aufweist.

**5.** Verfahren gemäß Anspruch 3, **dadurch gekennzeichnet, daß** es eine Anzahl Hypothesen einer Sequenz von wenigstens zwei Beschreibungselementen bewertet (D5'), daß es für das erste Element der Sequenz einen Unterschied zwischen den für die Anzahl Hypothesen der Sequenz erhaltenen Wahrscheinlichkeitsmaße berechnet und daß der Wert des ersten Beschreibungselements der Sequenz jenem der identifizierten Hypothese entspricht.

**6.** Vorrichtung (200) zur Dekodierung eines wenigstens ein Bild ($I_m$) darstellenden Flusses kodierter Daten, wobei das Bild in Blöcke aufgeteilt ist, **dadurch gekennzeichnet, daß** es eine Rechenmaschine aufweist, die ausgelegt oder speziell konzipiert ist,
für den laufenden Block:

- eine Anzahl Wertehypothesen wenigstens eines Beschreibungselements des laufenden Blocks durch Berechnen eines Wahrscheinlichkeitsmaßes (V) je Hypothese zu bewerten (EVAL),
- einen Unterschied zwischen den erhaltenen Wahrscheinlichkeitsmaßen zu berechnen (CALC DV),
- wenigstens einen Parameter eines Entropiedekodierers in Abhängigkeit vom berechneten Unterschied zu bestimmen (DET p), wobei der wenigstens eine Parameter zu einer Gruppe gehört, die mindestens

- einen Parameter, der einen einem adaptiven binären arithmetischen Dekodierer zugeordneten Zusammenhang aufweist,
- einen Parameter, der eine einer komplementären Identifizierungsinformation wenigstens einer der Hypothesen zugeordnete Wahrscheinlichkeit aufweist,
- einen Parameter mit einer Kennung eines vorbestimmten Dekodierers aufweist,

- die komplementäre Identifizierungsinformation wenigstens einer der Hypothesen mit Hilfe eines Entropiedekodierers, der durch den wenigstens einen Parameter parametriert ist, zu dekodieren (DEC IC) und
- wenigstens eine der Hypothesen mit Hilfe wenigstens der dekodierten komplementären Information zu identifizieren und, von der wenigstens einen identifizierten Hypothese ausgehend, den Wert des wenigstens einen Beschreibungselements für den laufenden Block zu erhalten (DER ED).

**7.** Vorrichtung (100) zur Kodierung eines wenigstens ein Bild ($I_m$) darstellenden Datenflusses, wobei das Bild in Blöcke aufgeteilt ist, **dadurch gekennzeichnet, daß** es eine Rechenmaschine aufweist, die ausgelegt oder speziell konzipiert ist,
für den laufenden Block:

- eine Anzahl Wertehypothesen wenigstens eines Beschreibungselements des laufenden Blocks durch Berechnen eines Wahrscheinlichkeitsmaßes (V) je Hypothese zu bewerten (EVAL),
- einen Unterschied zwischen den erhaltenen Wahrscheinlichkeitsmaßen zu berechnen (CALC DV),
- wenigstens einen Parameter eines Entropiekodierers in Abhängigkeit vom berechneten Unterschied zu bestimmen (DET p), wobei der wenigstens eine Parameter zu einer Gruppe gehört, die mindestens

- einen Parameter, der einen einem adaptiven binären arithmetischen Kodierer zugeordneten Zusammenhang aufweist,
- einen Parameter, der eine einer komplementären Identifizierungsinformation wenigstens einer der Hypothesen zugeordnete Wahrscheinlichkeit aufweist,
- einen Parameter mit einer Kennung eines vorbestimmten Kodierers aufweist,

- die komplementäre Identifizierungsinformation wenigstens einer der Hypothesen mit Hilfe eines Entropiekodierers, der durch den wenigstens einen Parameter parametriert ist, zu kodieren (COD IC) und
- die kodierte Information in den Fluß einzufügen (INSERT).

**8.** Benutzerendgeräteausrüstung (TU, TU'), **dadurch gekennzeichnet, daß** sie eine Vorrichtung (200) zum Dekodieren wenigstens eines digitalen Bilds gemäß Anspruch 6 und/oder eine Vorrichtung (100) zum Kodieren wenigstens eines digitalen Bilds gemäß Anspruch 7 aufweist.

**9.** Computerprogramm (Pg1, Pg2), das Befehle zur Durchführung des Verfahrens gemäß einem der Ansprüche 1 bis 5 aufweist, wenn es durch einen Prozessor durchgeführt wird.

**10.** Von einem Computer lesbares Speichermedium, auf dem ein Computerprogramm gespeichert ist, das Programmcodeinformationen für die Durchführung der Schritte des Verfahrens gemäß einem der Ansprüche 1 bis 5 aufweist.

**Claims**

1. A method for decoding an encoded data stream representative of at least one image ($I_m$), said image being divided into blocks, **characterised in that** the decoding method comprises, for a current block, the following steps:

   - Evaluating (D3) a plurality of value hypotheses of at least one description element of the current block, by calculating a likelihood measurement (V) per hypothesis, said calculation being the same as that used to encode the data stream;
   - Calculating (D4) a disparity (DV) of the obtained likelihood measurements;
   - Determining (D5) at least one parameter (p) of an entropy decoder as a function of the calculated disparity (DV), said at least one parameter belonging to a group comprising at least:

     - a parameter comprising a context associated with an adaptive binary arithmetic decoder;
     - a parameter comprising a probability associated with a complementary information for identifying at least one of these hypotheses;
     - a parameter comprising an identifier of a predetermined decoder;

   - Decoding (D6) using an entropy decoder configured by said at least one parameter, of the complementary information (IC) for identifying at least one of said hypotheses; and
   - Identifying (D7) at least one of the hypotheses using at least the decoded complementary information and obtaining the value of said at least one description element for the current block, from said at least one identified hypothesis.

2. A method for encoding a data stream representative of at least one image ($I_m$), said image being divided into blocks, **characterised in that** it comprises the following steps, implemented for a current block:

   - Evaluating (E3) a plurality of value hypotheses of at least one description element of the current block, by calculating a likelihood measurement (V) per hypothesis;
   - Calculating (E4) a disparity (DV) of the obtained likelihood measurements;
   - Determining (E5) at least one parameter (p) of an entropy encoder according to the calculated disparity (DV), said at least one parameter belonging to a group comprising at least:

     - a parameter comprising a context associated with an adaptive binary arithmetic encoder;
     - a parameter comprising a probability associated with a complementary information for identifying at least one of these hypotheses;
     - a parameter comprising an identifier of a predetermined encoder;

   - Encoding (E7) said complementary information using an entropy encoder configured by said at least one parameter; and
   - Inserting (EQ) the encoded information into the stream.

3. The method according to one of claims 1 or 2, **characterised in that** it comprises a step of classifying (C2', D2) hypotheses in decreasing likelihood order, **in that** the complementary information (IC) includes a rank in the classification and **in that** the value of said at least one description element corresponds to the hypothesis classified in said rank.

4. The method according to one of claims 1 to 2, **characterised in that** it further comprises a step of predicting (E4, E34', D5, D53') the value of said at least one description element by selecting the value hypothesis associated with the highest likelihood measurement, called predicted value, and **in that** the complementary information comprises a difference between the predicted value and the value of the description element, called residual value.

5. The method according to claim 3, **characterised in that** it evaluates (D5') a plurality of hypotheses of a sequence of at least two description elements, **in that** for the first element of the sequence, it calculates a disparity of the likelihood measurements obtained for the plurality of hypotheses of the sequence and **in that** the value of the first description element of the sequence matches that of the identified hypothesis.

6. A device (200) for decoding an encoded data stream representative of at least one image ($I_m$), said image being divided into blocks, **characterised in that** it comprises a computing machine configured for or dedicated to:

EP 3 646 597 B1

for the current block:

- Evaluating (EVAL) a plurality of value hypotheses of at least one description element of the current block, by calculating a likelihood measurement (V) by hypothesis;
- Calculating (CALC DV) a disparity of the obtained likelihood measurements;
- Determining (DET p) at least one parameter of an entropy decoder according to the calculated disparity, said at least one parameter belonging to a group comprising at least:

- a parameter comprising a context associated with an adaptive binary arithmetic decoder;
- a parameter comprising a probability associated with a complementary information for identifying at least one of these hypotheses;
- a parameter comprising an identifier of a predetermined decoder;

- Decoding (DEC IC) using an entropy decoder configured by said at least one parameter the complementary information for identifying of at least one of said hypotheses;
- Identifying at least one of the hypotheses using at least the decoded complementary information and obtaining (DER ED) the value of said at least one description element for the current block, from said at least one identified hypothesis.

7. A device (100) for encoding a data stream representative of at least one image ($I_m$), said image being divided into blocks, **characterised in that** it comprises a computing machine configured for or dedicated to:
for the current block:

- Evaluating (EVAL) a plurality of value hypotheses of at least one description element of the current block, by calculating a likelihood measurement (V) per hypothesis;
- Calculating (CALC DV) a disparity of the obtained likelihood measurements;
- Determining (DET p) at least one parameter of an entropy encoder as a function of the calculated disparity, said at least one parameter belonging to a group comprising at least:

- a parameter comprising a context associated with an adaptive binary arithmetic encoder;
- a parameter comprising a probability associated with a complementary information for identifying at least one of these hypotheses;
- a parameter comprising an identifier of a predetermined encoder;

- Encoding (COD IC) using an entropy encoder configured by said at least one parameter the complementary information for identifying at least one of said hypotheses; and
- Inserting (INSERT) the encoded information into the stream.

8. A user terminal equipment (TU, TU') **characterised in that** it comprises a device (200) for decoding at least one digital image according to claim 6 and/or a device (100) for encoding at least one digital image according to claim 7.

9. A computer program (Pg1, Pg2) comprising instructions for carrying out the method according to one of claims 1 to 5, when it is executed by a processor.

10. A computer-readable recording medium on which is recorded a computer program comprising program encode instructions for performing the steps of the method according to one of claims 1 to 5.

FIG. 1

FIG. 3

FIG. 2

FIG. 4

FIG. 5

FIG. 6

FIG. 7

FIG. 8

FIG. 9

FIG. 10

| | | | | | | 0 | 0 | 1 | 1 | 0 | 1 | | | | | | | | | | | 1 | 1 | 0 | 1 | 0 | 1 | 0 |
|---|---|---|---|---|---|---|---|---|---|---|---|---|---|---|---|---|---|---|---|---|---|---|---|---|---|---|---|---|

| CU1 | CU2 | CU 3 | CU4 |
|---|---|---|---|

| 0 | 0 | 0 | 0 | 0 | 0 |
|---|---|---|---|---|---|

| 0 | 0 | 0 | 0 | 0 | 1 |
|---|---|---|---|---|---|

| 0 | 0 | 0 | 0 | 1 | 0 |
|---|---|---|---|---|---|

...

| 0 | 1 | 1 | 0 | 1 | 0 |
|---|---|---|---|---|---|

| 1 | 1 | 1 | 1 | 1 | 1 |
|---|---|---|---|---|---|

# FIG. 11

| | | | | | 0 | 0 | 1 | 1 | 0 | 1 | | | | | | | | | 1 | 1 | 0 | 1 | 0 | 1 | 0 |
|---|---|---|---|---|---|---|---|---|---|---|---|---|---|---|---|---|---|---|---|---|---|---|---|---|---|

| CU1 | CU2 | CU 3 | CU4 |
|---|---|---|---|

| 0 | 0 | 0 | 0 | 0 | 0 |
|---|---|---|---|---|---|

| 0 | 0 | 0 | 0 | 0 | 1 |
|---|---|---|---|---|---|

| 0 | 0 | 0 | 0 | 1 | 0 |
|---|---|---|---|---|---|

...

| 0 | 1 | 1 | 0 | 1 | 0 |
|---|---|---|---|---|---|

| 1 | 1 | 1 | 1 | 1 | 1 |
|---|---|---|---|---|---|

FIG. 12

11

| | | | | | 0 | 0 | 1 | 1 | 0 | 1 | | | | | | | | 1 | 1 | 0 | 1 | 0 | 1 | 0 |

| CU1 | | CU2 | CU 3 | CU4 |

| 0 | 0 | 0 | 0 | 0 | 0 |

| 0 | 0 | 0 | 0 | 0 | 1 |

| 0 | 0 | 0 | 0 | 1 | 0 |

...

| 0 | 1 | 1 | 0 | 1 | 0 |

| 1 | 1 | 1 | 1 | 1 | 1 |

FIG. 13

TB3

| FL2 | | |

TB1        TB2

FIG. 15

FIG. 16

| | | | | | | | | | | |
|---|---|---|---|---|---|---|---|---|---|---|
| | | | | | | | | | | |
| | | | | | | | | | | |
| | | | | | | | | | | |
| | | | | | | | | | | |
| | | | | | | | | | | |
| | | | | | | | | | | |
| | | | | | | B5 | B6 | B7 | B8 | |
| | | | | | | A5 | A6 | A7 | A8 | |
| | | | | | B4 | A4 | r4 | r5 | r6 | r7 |
| | | | | | B3 | A3 | r3 | | | |
| | | | | | B2 | A2 | r2 | | | |
| | | | | | B1 | A1 | r1 | | | |
| | | | | | | | | | | |

FIG. 14

VB(i)

TB3

| FL2 | 0011011100010011110 | 10010 | |
|---|---|---|---|

PF1

TB1

PF2

TB2

FIG. 17

FIG. 18

FIG. 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3023112

- US 2013044808 A

**Littérature non-brevet citée dans la description**

- **KOYAMA J et al.** Coefficient sign bit compression in video coding. *PICTURE CODING SYMPOSIUM (PCS 2012),* 2012
- **MARPE, D. ; SCHWARZ, H. ; WIEGAND, T.** Context-Based Adaptive Binary Arithmetic Coding in the H.264/AVC Video Compression Standard. *IEEE Trans. Circuits and Systems for Video Technology,* Juillet 2003, vol. 13 (7), 620-636

- High efficiency video coding. ISO/IEC 23008-2:2013 - High efficiency coding and media delivery in heterogeneous environments. International Organization for Standardization, Novembre 2013
- **SOLE et al.** Transform Coefficient Coding in HEVC. *la revue IEEE Transactions on Circuits and Systems for Video Technology,* Décembre 2012, vol. 22 (12), 1765-1777